# EUROPEAN PATENT APPLICATION

(11) **EP 4 797 789 A1**
(43) Date of publication of application: **26.08.2026**
(21) Application number: 24884380.7
(22) Date of filing: 09.10.2024
(51) Int. Cl.: H04W 28/24

(54) **COMMUNICATION METHOD, COMMUNICATION APPARATUS AND COMMUNICATION SYSTEM**

(30) Priority: 03.11.2023 CN 202311465207
(71) Applicant: HUAWEI TECHNOLOGIES CO., LTD., Shenzhen, Guangdong 518129 (CN)
(72) Inventor: ZANG, Xin, Shenzhen, Guangdong 518129 (CN); MA, Jingwang, Shenzhen, Guangdong 518129 (CN); XU, Yishan, Shenzhen, Guangdong 518129 (CN); ZHOU, Yu, Shenzhen, Guangdong 518129 (CN); ZHOU, Runze, Shenzhen, Guangdong 518129 (CN)
(74) Representative: Goddar, Heinz J.
(86) International application number: PCT/CN2024/123770
(87) International publication number: WO 2025/092376

(57) **Abstract**

This application provides a communication method, a communication apparatus, and a communication system. The method includes: A second network element determines reception delay information of a protocol data unit PDU set, where the reception delay information indicates a reception delay of the PDU set at a user plane function network element UPF; the second network element sends the reception delay information to a first network element; the first network element obtains a PDU set delay budget PSDB of the PDU set; the first network element determines a packet delay budget PDB of a data packet in the PDU set based on the reception delay information and the PSDB; the first network element sends the PDB to a first device; and the first device performs scheduling processing on a data packet from the UPF based on the PDB. The method can improve effect of transmission delay control in a communication system, improving communication quality of the communication system.

## Description

### CROSS-REFERENCE TO RELATED APPLICATIONS

This application claims priority to Chinese Patent Application No. 202311465207.1, filed with the China National Intellectual Property Administration on November 3, 2023 and entitled "COMMUNICATION METHOD, COMMUNICATION APPARATUS, AND COMMUNICATION SYSTEM", which is incorporated herein by reference in its entirety.

### TECHNICAL FIELD

This application relates to the field of communication technologies, and in particular, to a communication method, a communication apparatus, and a communication system.

### BACKGROUND

Currently, in communication systems such as a 3rd generation partnership project (3rd generation partnership project, 3GPP) access communication system or a non-3GPP access communication system, a terminal device may be connected to a core network via an access network, to access a network and perform service interaction. In a 3GPP access system, an access network function may be implemented by an access network device. In a non-3GPP access communication system, an access network function may be implemented by an access point and/or a network function (network function, NF) network element.

In the foregoing communication systems, a data flow of service transmission includes at least one data packet set (for example, a protocol data unit (protocol data unit, PDU) set, and the PDU set is used as an example for subsequent description). The PDU set includes one or more PDUs (or data packets) that carry an application layer payload (for example, a video frame or a video slice). During data flow transmission and processing, transmission of a PDU set in a data flow needs to meet a requirement of a PDU set delay budget (PDU set delay budget, PSDB), to ensure quality of service of a service. Therefore, a network element or device that implements the access network function in the communication system needs to perform scheduling processing at PDU set granularity on the data packet in the PDU set based on the PSDB. However, currently, some network elements or devices that implement the access network function may not support performing scheduling processing at PDU set granularity on the data packet in the PDU set based on the PSDB, or effect of transmission delay control is poor when scheduling processing at PDU set granularity is performed on the data packet in the PDU set based on the PSDB, resulting in degraded communication quality of the system.

### SUMMARY

This application provides a communication method, a communication apparatus, and a communication system, to improve effect of transmission delay control in a communication system, improving communication quality of the communication system.

According to a first aspect, an embodiment of this application provides a communication method. The method may be performed by a first network element, or may be performed by a component (for example, a processor, a chip, or a chip system) in the first network element. The method includes: obtaining reception delay information of a protocol data unit PDU set, and obtaining a PDU set delay budget of the PDU set, where the reception delay information indicates a reception delay of the PDU set at a UPF; determining a packet delay budget of a data packet in the PDU set based on the reception delay information and the PDU set delay budget, where the packet delay budget indicates an upper bound of a transmission delay of the data packet between the UPF and a terminal device; and sending the packet delay budget to a first device.

In the method, the PDU set delay budget is a quality of service QoS parameter at PDU set granularity, and the packet delay budget is a QoS parameter at PDU granularity, that is, data packet granularity. By determining the packet delay budget of the data packet in the PDU set based on the PDU set delay budget of the PDU set, the first network element can convert the QoS parameter at PDU set granularity into the QoS parameter at PDU granularity. The first network element sends the packet delay budget to the first device, to transfer the QoS parameter at PDU granularity to the first device, so that the first device performs scheduling processing at PDU granularity on a data packet based on the QoS parameter at PDU granularity, to meet a QoS parameter requirement at PDU set granularity, that is, a requirement of the PDU set delay budget. Therefore, even if the first device does not support performing scheduling processing at PDU set granularity on the data packet in the PDU set based on the PDU set delay budget, the requirement of the PDU set delay budget of the PDU set can still be met in a process of scheduling processing on the data packet in the PDU set. In addition, accuracy of a delay budget can be improved, improving accuracy of delay control in a process of scheduling processing, improving effect of transmission delay control, and improving communication quality of a system.

In a possible design, the reception delay information includes at least one of the following: a first time difference; a delay corresponding to a value interval including the first time difference in multiple specified value intervals, where different value intervals correspond to different delays; a maximum time difference in multiple first time differences; a minimum time difference in multiple first time differences; and/or an average time difference of multiple first time differences, where the first time difference is a time difference between arrivals, at the UPF, of a 1^{st} data packet and a last data packet in a PDU set received by the UPF. The method provides multiple manners of determining the reception delay information, and is of high practicability.

In a possible design, the PDU set is received by the UPF in a first time period.

Based on this method, the reception delay information may be determined based on a PDU set received by the UPF in a period of time. For different time periods, reception delay information of a PDU set in each time period may be determined based on the PDU set received by the UPF in the time period, so that the reception delay information can be updated with time, and accuracy of the reception delay information can be ensured.

In a possible design, the reception delay information is further used as reception delay information of each PDU set in a data flow to which the PDU set belongs.

In the method, the reception delay information of the PDU set may be used as reception delay information corresponding to the data flow in which the PDU set is located, so that the reception delay information corresponding to the data flow can be conveniently and efficiently determined, to facilitate subsequent processing on the data flow based on the reception delay information.

In a possible design, the obtaining the reception delay information of the PDU set includes: sending a first message to a second network element, where the first message is used to subscribe to the reception delay information; and receiving first information from the second network element, where the first information indicates the reception delay information. In the method, the first network element may obtain the reception delay information from the second network element through subscription, and efficiency is high.

In a possible design, the first message includes at least one of the following: an analytics ID, used to identify data that needs to be obtained, where the data that needs to be obtained includes the reception delay information; information indicating a terminal device associated with the reception delay information; information indicating the data flow to which the PDU set belongs; information indicating a data granularity of the reception delay information; information indicating an arrangement order of feedback information of the second network element; a quantity of PDU sets used to determine the reception delay information; and/or information indicating a first time period, where one or more PDU sets that arrive at the UPF in the first time period are used to determine the reception delay information.

In the method, different information in the first message indicates from different perspectives the information that needs to be obtained, and comprehensive reception delay information may be subscribed to by using the information, to facilitate subsequent processing.

In a possible design, the first network element is a PCF or an SMF, and the second network element is an NWDAF or the UPF; or the first network element is an NWDAF, and the second network element is the UPF.

In a possible design, the first device is any one of the following: an N3IWF, a TNGF, a TWIF, and a W-AGF.

The N3IWF, the TNGF, the TWIF, the W-AGF, and the like are network elements configured to implement an access network function in a non-3GPP access communication system. These network elements support scheduling processing at PDU set granularity on a data packet in a PDU set, but a device, for example, an access point AP, connected between these network elements and a terminal device does not support scheduling processing at PDU set granularity on a data packet in a PDU set. These network elements and the access point AP perform scheduling processing at different granularities. Consequently, a policy of delay control performed by these network elements for a PDU set cannot be applied to the access point AP, affecting effect of transmission delay control for a PDU set, and resulting in degraded overall communication quality. Therefore, in the foregoing method, these network elements serve as first devices, so that these network elements can obtain the packet delay budget obtained by converting the PDU set delay budget, and can perform scheduling processing at PDU granularity on the data packet in the PDU set based on the packet delay budget. On the one hand, this ensures that scheduling processing complies with the requirement of the PDU set delay budget. On the other hand, it ensures that these network elements have a same processing granularity as the access point AP, so that the access point AP can perform data packet scheduling processing according to a same policy. In this way, the effect of transmission delay control for the PDU set is improved and communication quality is enhanced.

In a possible design, the sending the packet delay budget to the first device includes: sending the packet delay budget to the first device via a third network element, where the third network element includes one or more of a PCF, an SMF, or an AMF.

In a possible design, the first network element is the UPF.

In a possible design, the determining the packet delay budget of the data packet in the PDU set based on the reception delay information and the PDU set delay budget includes: using a difference between the PDU set delay budget and the reception delay information as the packet delay budget.

According to the method, the packet delay budget of the data packet in the PDU set can be accurately determined when the PDU set delay budget of the PDU set is met, to ensure compliance of scheduling processing performed based on the packet delay budget with the requirement of the PDU set delay budget, ensuring good delay control effect.

According to a second aspect, an embodiment of this application provides a communication method. The method may be performed by a second network element, or may be performed by a component (for example, a processor, a chip, or a chip system) in the second network element. The method includes: determining reception delay information of a PDU set, where the reception delay information indicates a reception delay of the PDU set at a UPF; and sending the reception delay information to a first network element, where the reception delay information is used to determine a packet delay budget of a data packet in the PDU set, and the packet delay budget indicates an upper bound of a transmission delay of the data packet between the UPF and a terminal device.

In the method, the PDU set delay budget is a quality of service QoS parameter at PDU set granularity, and the packet delay budget is a QoS parameter at PDU granularity, that is, data packet granularity. The second network element sends the reception delay information to the first network element, so that the first network element can convert, based on the reception delay information, the QoS parameter at PDU set granularity, that is, the PDU set delay budget, into the QoS parameter at PDU granularity, that is, the packet delay budget. Scheduling processing at PDU granularity performed on the data packet based on the QoS parameter at PDU granularity, that is, the packet delay budget, can meet a requirement of the PSDB. In addition, accuracy of a delay budget can be improved, improving accuracy of delay control in a process of scheduling processing, improving effect of transmission delay control, and improving communication quality of a system.

In a possible design, the reception delay information includes at least one of the following: a first time difference; a delay corresponding to a value interval including the first time difference in multiple specified value intervals, where different value intervals correspond to different delays; a maximum time difference in multiple first time differences; a minimum time difference in multiple first time differences; and/or an average time difference of multiple first time differences, where the first time difference is a time difference between arrivals, at the UPF, of a 1^{st} data packet and a last data packet in a PDU set received by the UPF.

In a possible design, the PDU set is received by the UPF in a first time period.

In a possible design, the reception delay information is further used as reception delay information of each PDU set in a data flow to which the PDU set belongs.

In a possible design, before determining the reception delay information of the PDU set, or before sending the reception delay information to the first network element, the method further includes: receiving a first message from the first network element, where the first message is used to subscribe to the reception delay information; and the sending the reception delay information to the first network element includes: sending first information to the first network element, where the first information indicates the reception delay information.

In a possible design, the first message includes at least one of the following: an analytics ID, used to identify data that needs to be obtained, where the data that needs to be obtained includes the reception delay information; information indicating a terminal device associated with the reception delay information; information indicating the data flow to which the PDU set belongs; information indicating a data granularity of the reception delay information; information indicating an arrangement order of feedback information of the second network element; a quantity of PDU sets used to determine the reception delay information; and/or information indicating a first time period, where one or more PDU sets that arrive at the UPF in the first time period are used to determine the reception delay information.

In a possible design, the first network element is a PCF or an SMF, and the second network element is an NWDAF or the UPF; or the first network element is an NWDAF, and the second network element is the UPF.

In a possible design, the determining the reception delay information of the PDU set includes: determining reception moment information, where the reception moment information includes moments at which a 1^{st} data packet and a last data packet in each of at least one PDU set received by the UPF arrive at the UPF; and determining the reception delay information based on the reception moment information.

In the method, the reception delay information of the PDU set can be accurately determined based on the reception moment information about the 1^{st} data packet and the last data packet in the PDU set.

In a possible design, the method further includes: sending the PDU set, where a data packet in the PDU set carries reception moment information, and the reception moment information indicates a moment at which the UPF receives the data packet.

In the method, the reception moment information is carried in a sent data packet, so that a network element or device receiving the data packet can easily and quickly obtain the reception moment information, and can process the data packet based on the reception moment information.

In a possible design, the first network element is one or more of an NWDAF, a PCF, an SMF, an AMF, or an N3IWF, and the second network element is the UPF.

According to a third aspect, an embodiment of this application provides a communication method. The method may be performed by a first device, or may be performed by a component (for example, a processor, a chip, or a chip system) in the first device. The method includes: receiving a packet delay budget from a first network element, where the packet delay budget indicates an upper bound of a transmission delay of a data packet between a UPF and a terminal device; receiving the data packet from the UPF, where the data packet carries reception moment information, and the reception moment information indicates a moment at which the UPF receives the data packet; and performing scheduling processing on the data packet based on the packet delay budget and the reception moment information.

When scheduling processing is performed on the data packet based on the packet delay budget alone, corresponding effect of transmission delay control is poor. However, in the foregoing method, with reference to the packet delay budget and the reception moment information, the first device can perform data packet scheduling processing based on additional reference information, improving processing efficiency and corresponding effect of transmission delay control, and improving communication quality.

In a possible design, the performing scheduling processing on the data packet based on the packet delay budget and the reception moment information includes: determining a remaining delay budget based on the packet delay budget and the reception moment information, where the remaining delay budget indicates a transmission delay of the data packet between the first device and the terminal device; and performing scheduling processing on the data packet based on the remaining delay budget.

In the method, based on the packet delay budget and the reception moment information, the first device can accurately determine a delay budget for transmitting the data packet to the terminal device, that is, the foregoing remaining delay budget. Therefore, performing scheduling processing on the data packet based on the delay budget ensures compliance of the transmission delay of the data packet with a requirement, ensuring communication quality.

In a possible design, the first device is any one of the following: an N3IWF, a TNGF, a TWIF, and a W-AGF.

According to a fourth aspect, an embodiment of this application provides a communication method. The method may be performed by a UPF network element, or may be performed by a component (for example, a processor, a chip, or a chip system) in the UPF network element. The method includes: receiving a data packet; and sending the data packet to a first device after adding reception moment information and/or reception delay information to the data packet, where the reception moment information indicates a moment at which the UPF receives the data packet, the reception delay information indicates a reception delay of a PDU set to which the data packet belongs at the UPF, and the reception delay information is used to determine a remaining delay budget of the data packet.

In the method, the UPF includes the reception moment information and/or the reception delay information in the sent data packet, to enable the first device receiving the data packet to conveniently and quickly obtain the reception moment information and/or the reception delay information, so that the remaining delay budget is accurately determined based on the reception moment information and/or the reception delay information, ensuring effect of transmission delay control when the first device performs data packet scheduling processing based on the remaining delay budget, and improving communication quality.

In a possible design, the adding the reception moment information and/or the reception delay information to the data packet includes: adding the reception moment information and/or the reception delay information to a GTP protocol field of the data packet.

In a possible design, the reception delay information includes at least one of the following: a first time difference; a delay corresponding to a value interval including the first time difference in multiple specified value intervals, where different value intervals correspond to different delays; a maximum time difference in multiple first time differences; a minimum time difference in multiple first time differences; and/or an average time difference of multiple first time differences, where the first time difference is a time difference between arrivals, at the UPF, of a 1^{st} data packet and a last data packet in a PDU set received by the UPF.

In a possible design, the PDU set is received by the UPF in a first time period.

In a possible design, the reception delay information is further used as reception delay information of each PDU set in a data flow to which the PDU set belongs.

In a possible design, when the reception moment information is added to the data packet, the data packet is each data packet in the PDU set, or the data packet is a 1^{st} or last data packet in the PDU set; or when the reception delay information is added to the data packet, the data packet is a last data packet in the PDU set.

In a possible design, the first device is any one of the following: an N3IWF, a TNGF, a TWIF, and a W-AGF.

According to a fifth aspect, an embodiment of this application provides a communication method. The method may be performed by a first device, or may be performed by a component (for example, a processor, a chip, or a chip system) in the first device. The method includes: obtaining a PDU set delay budget of a PDU set, where the PDU set includes a data packet; receiving the data packet from a UPF, where the data packet includes reception moment information and/or reception delay information, the reception moment information indicates a moment at which the UPF receives the data packet, and the reception delay information indicates a reception delay of the PDU set at the UPF; determining a remaining delay budget of the data packet based on the PDU set delay budget and the reception moment information and/or the reception delay information; and performing scheduling processing on the data packet based on the remaining delay budget.

In the method, the PDU set delay budget is a quality of service QoS parameter at PDU set granularity, and the remaining delay budget is a QoS parameter at PDU granularity, that is, data packet granularity. By determining the remaining delay budget of the data packet in the PDU set based on the PDU set delay budget of the PDU set, the first device can convert the QoS parameter at PDU set granularity into the QoS parameter at PDU granularity, and perform scheduling processing at PDU granularity on the data packet based on the QoS parameter at PDU granularity, to meet a QoS parameter requirement at PDU set granularity, that is, a requirement of the PDU set delay budget. Therefore, even if the first device does not support performing scheduling processing at PDU set granularity on the data packet in the PDU set based on the PDU set delay budget, the requirement of the PDU set delay budget of the PDU set can still be met in a process of scheduling processing on the data packet in the PDU set. In addition, accuracy of a delay budget can be improved using the method, improving accuracy of delay control in a process of scheduling processing, improving effect of transmission delay control, and improving communication quality of a system.

In a possible design, the reception moment information and/or the reception delay information is located in a GTP protocol field of the data packet.

In a possible design, the reception delay information includes at least one of the following: a first time difference; a delay corresponding to a value interval including the first time difference in multiple specified value intervals, where different value intervals correspond to different delays; a maximum time difference in multiple first time differences; a minimum time difference in multiple first time differences; and/or an average time difference of multiple first time differences, where the first time difference is a time difference between arrivals, at the UPF, of a 1^{st} data packet and a last data packet in a PDU set received by the UPF.

In a possible design, the PDU set is received by the UPF in a first time period.

In a possible design, the reception delay information is further used as reception delay information of each PDU set in a data flow to which the PDU set belongs.

In a possible design, when the reception moment information is added to the data packet, the data packet is each data packet in the PDU set, or the data packet is a 1^{st} or last data packet in the PDU set; or when the reception delay information is added to the data packet, the data packet is a last data packet in the PDU set.

In a possible design, the determining the remaining delay budget of the data packet based on the PDU set delay budget and the reception moment information and/or the reception delay information includes: determining a time difference between a moment at which the first device receives the data packet and the reception moment information, and using a difference between the PDU set delay budget and the time difference as the remaining delay budget; or using a difference between the PDU set delay budget and the reception delay information as the remaining delay budget; or using a difference between the PDU set delay budget and the reception delay information as a packet delay budget of the data packet, determining a time difference between a moment at which the first device receives the data packet and the reception moment information, and using a difference between the packet delay budget and the time difference as the remaining delay budget, where the packet delay budget indicates an upper bound of a transmission delay of the data packet between the UPF and a terminal device.

In the method, the first device may determine the remaining delay budget in different manners based on different obtained information, and flexibility and practicability are high.

In a possible design, the performing scheduling processing on the data packet based on the remaining delay budget includes: determining a target QoS flow based on the remaining delay budget, and transmitting the data packet by using the target QoS flow.

Based on the method, the first device can select a QoS flow for the data packet based on the remaining delay budget of the data packet. In addition, data packets with different remaining delay budgets may be carried on different QoS flows for transmission, so that flexibility and practicability are high, and data packet transmission efficiency can be further improved.

In a possible design, an IP protocol field of the data packet includes a DSCP of an IPsec over which the QoS flow used to transmit the data packet is located, the DSCP corresponds to PDU set importance information of the PDU set, the QoS flow is created based on the PDU set importance information, and the PDU set importance information indicates an importance degree of the PDU set.

In this method, the PDU set importance information may be used to create the IP sec tunnel that carries the QoS flow, further extending a method for creating an IP sec tunnel.

In a possible design, the first device is any one of the following: an N3IWF, a TNGF, a TWIF, and a W-AGF.

According to a sixth aspect, an embodiment of this application provides a communication method. The method may be performed by a first device, or may be performed by a component (for example, a processor, a chip, or a chip system) in the first device. The method includes: receiving a PDU set from a UPF, where a GTP protocol field of a data packet in the PDU set carries PDU set information, and the PDU set information is used to identify the PDU set; and encapsulating the PDU set information in an IP protocol field of the data packet, and sending an obtained PDU set to an access point AP, where the PDU set information is used for scheduling processing on the data packet in the PDU set.

In the method, the first device encapsulates the PDU set information at an IP protocol layer of the data packet, so that the AP can successfully identify the PDU set information after receiving the data packet, and further identify, based on the PDU set information, data packets belonging to a same PDU set. Therefore, the method can support the AP in performing scheduling processing at PDU set granularity on a received data packet, improving accuracy of performing transmission delay control for a PDU set, and improving communication quality.

In a possible design, the IP protocol field of the data packet further includes a DSCP of an IPsec over which a QoS flow used to transmit the data packet is located, the DSCP corresponds to the PDU set delay budget, and the QoS flow is created based on the PDU set delay budget.

In this method, the PDU set delay budget may be used to create the IP sec tunnel that carries the QoS flow, further extending a method for creating an IP sec tunnel.

In a possible design, the sending the obtained PDU set to the AP includes: sending the obtained PDU set to the AP by using the QoS flow.

In a possible design, the first device is any one of the following: an N3IWF, a TNGF, a TWIF, and a W-AGF.

According to a seventh aspect, an embodiment of this application provides a communication apparatus, including: a module configured to perform the first aspect or any method in the first aspect, a module configured to perform the second aspect or any method in the second aspect, a module configured to perform the third aspect or any method in the third aspect, a module configured to perform the fourth aspect or any method in the fourth aspect, a module configured to perform the fifth aspect or any method in the fifth aspect, or a module configured to perform the sixth aspect or any method in the sixth aspect.

According to an eighth aspect, an embodiment of this application provides a communication apparatus, including at least one processor. The at least one processor is configured to execute instructions stored in a memory, to cause the communication apparatus to perform the first aspect or any method in the first aspect, to perform the second aspect or any method in the second aspect, to perform the third aspect or any method in the third aspect, to perform the fourth aspect or any method in the fourth aspect, to perform the fifth aspect or any method in the fifth aspect, or to perform the sixth aspect or any method in the sixth aspect.

In a possible design, the communication apparatus further includes the memory, and the memory is configured to store the instructions.

According to a ninth aspect, an embodiment of this application provides a communication apparatus, including at least one processor, and a memory and a communication interface that are communicatively connected to the at least one processor.

The communication interface is configured to: receive a signal from another communication apparatus other than the communication apparatus and transmit the signal to the processor, or send a signal from the processor to another communication apparatus other than the communication apparatus.

The memory stores instructions that can be executed by the at least one processor. The at least one processor executes the instructions stored in the memory, to cause the communication apparatus to perform the first aspect or any method in the first aspect, to perform the second aspect or any method in the second aspect, to perform the third aspect or any method in the third aspect, to perform the fourth aspect or any method in the fourth aspect, to perform the fifth aspect or any method in the fifth aspect, or to perform the sixth aspect or any method in the sixth aspect.

In a possible design, the communication apparatus further includes a transceiver, and the at least one processor is configured to control the transceiver to receive and send a signal. The transceiver may include a receiver and a transmitter. The receiver is configured to receive a signal, and the transmitter is configured to send a signal.

In a possible design, the communication apparatus may be a device or apparatus having a chip, a device or apparatus having an integrated circuit, or a chip, a chip system, a module, or a control unit in the terminal device or the communication apparatus shown above. This is not specifically limited in this application. It should be noted that the communication apparatus mentioned in this application may be the communication apparatus itself, or may be a chip, a functional module, an integrated circuit, or the like that is in the communication apparatus and that performs the method provided in this application. This is not specifically limited in this application.

According to a tenth aspect, this application provides a computer-readable storage medium, where the computer-readable storage medium stores a computer program or instructions. When the computer program or the instructions are run on a communication apparatus, the communication apparatus is caused to perform the first aspect or any method in the first aspect, to perform the second aspect or any method in the second aspect, to perform the third aspect or any method in the third aspect, to perform the fourth aspect or any method in the fourth aspect, to perform the fifth aspect or any method in the fifth aspect, or to perform the sixth aspect or any method in the sixth aspect.

According to an eleventh aspect, this application provides a computer program product, where the computer program product includes a computer program or instructions. When the computer program or the instructions are executed by a communication apparatus, the first aspect or any method in the first aspect is implemented, the second aspect or any method in the second aspect is implemented, the third aspect or any method in the third aspect is implemented, the fourth aspect or any method in the fourth aspect is implemented, the fifth aspect or any method in the fifth aspect is implemented, or the sixth aspect or any method in the sixth aspect is implemented.

According to a twelfth aspect, this application provides a chip system. The chip system includes a processor, and the processor is configured to read and execute a software program stored in a memory, to implement the first aspect or any method in the first aspect, to implement the second aspect or any method in the second aspect, to implement the third aspect or any method in the third aspect, to implement the fourth aspect or any method in the fourth aspect, to implement the fifth aspect or any method in the fifth aspect, or to implement the sixth aspect or any method in the sixth aspect.

In a possible design, the chip system further includes the memory, and the processor is coupled to the memory through an interface.

According to a thirteenth aspect, this application provides a communication system. The communication system includes the first network element according to the first aspect, the second network element according to the second aspect, and the first device according to the third aspect, or the communication system includes the UPF network element according to the fourth aspect and the first device according to the fifth aspect.

For technical effects that can be achieved by some content in the second aspect to the fifth aspect, refer to descriptions of beneficial effects of corresponding content in the first aspect. Similarities are not described again. For technical effects that can be achieved in any one of the seventh aspect to the thirteenth aspect, refer to descriptions of beneficial effects in the first aspect to the sixth aspect. Details are not described herein again.

### BRIEF DESCRIPTION OF DRAWINGS

FIG. 1 is a diagram of an architecture of a 3GPP access communication system;
FIG. 2 is a diagram of an architecture of a non-3GPP access communication system;
FIG. 3 is a diagram of a network architecture of a non-3GPP access communication system;
FIG. 4 is a diagram of a network architecture of a non-3GPP access communication system;
FIG. 5 is a diagram of a communication method according to an embodiment of this application;
FIG. 6A to FIG. 6C are a schematic flowchart of a communication method according to an embodiment of this application;
FIG. 7A to FIG. 7C are a schematic flowchart of a communication method according to an embodiment of this application;
FIG. 8A to FIG. 8C are a schematic flowchart of a communication method according to an embodiment of this application;
FIG. 9 is a diagram of a communication method according to an embodiment of this application;
FIG. 10A and FIG. 10B are a schematic flowchart of a communication method according to an embodiment of this application;
FIG. 11 is a diagram of a communication method according to an embodiment of this application;
FIG. 12A and FIG. 12B are a schematic flowchart of a communication method according to an embodiment of this application;
FIG. 13 is a diagram of a communication apparatus according to an embodiment of this application; and
FIG. 14 is a diagram of a structure of a communication apparatus according to an embodiment of this application.

### DESCRIPTION OF EMBODIMENTS

The following describes in detail embodiments of this application with reference to accompanying drawings.

The method and the device are based on a same technical concept. Because the method and the device have similar principles for resolving the problem, reference may be mutually made to implementations of the device and the method. No repeated descriptions are provided.

It should be noted that the term "and/or" in this application describes an association relationship between associated objects and represents that three relationships may exist. For example, A and/or B may represent the following three cases: Only A exists, both A and B exist, and only B exists. The character "/" generally indicates an "or" relationship between the associated objects. "Multiple" in this application means two or more. "At least one" means one or more. In addition, it should be understood that in description of this application, terms such as "first" and "second" are merely used for distinguishing and description, but should not be understood as indicating or implying relative importance, or should not be understood as indicating or implying a sequence.

Development of 5th generation (5th generation, 5G) communication drives exponential growth of media services. Video services become mainstream media forms, and emerging multimedia services such as 4K/8K ultra high definition video and extended reality (eXtended Reality, XR) emerge.

XR enables the coexistence and interaction between physical objects in the real world and digital objects in the virtual world through auxiliary devices, ultimately achieving a perfect fusion of the virtual and the real. Currently, XR mainly includes virtual reality (virtual reality, VR), augmented reality (augmented reality, AR), and mixed reality (mixed reality, MR). The 5G+XR mode brings a large number of new application scenarios (such as gaming, social networking, education, and medical care), which will become the mainstream trend of new media development in the future.

In the initial phase of XR, the bandwidth of a single XR service is required to be 80 megabits per second (Mbps). After 4K internet protocol television and internet access services are provisioned at the same time, the recommended bandwidth of XR users is 230 Mbps or higher. These new media services pose great challenges to the network transmission bandwidth. Network transmission efficiency needs to be improved to meet the requirements of fast service evolution. Currently, in a 5G system, a transmission bandwidth may be allocated to a service by using a quality of service (Quality of Service, QoS) mechanism, to ensure end-to-end quality of service of services.

For data flow transmission, the concept of protocol data unit (protocol data unit, PDU) set (set) is proposed in related standards. The data flow may include one or more PDU sets, and the PDU set includes one or more PDUs that carry an application layer payload (for example, a video frame or a video slice). Based on this, data processing in the XR service may be performed at PDU set granularity.

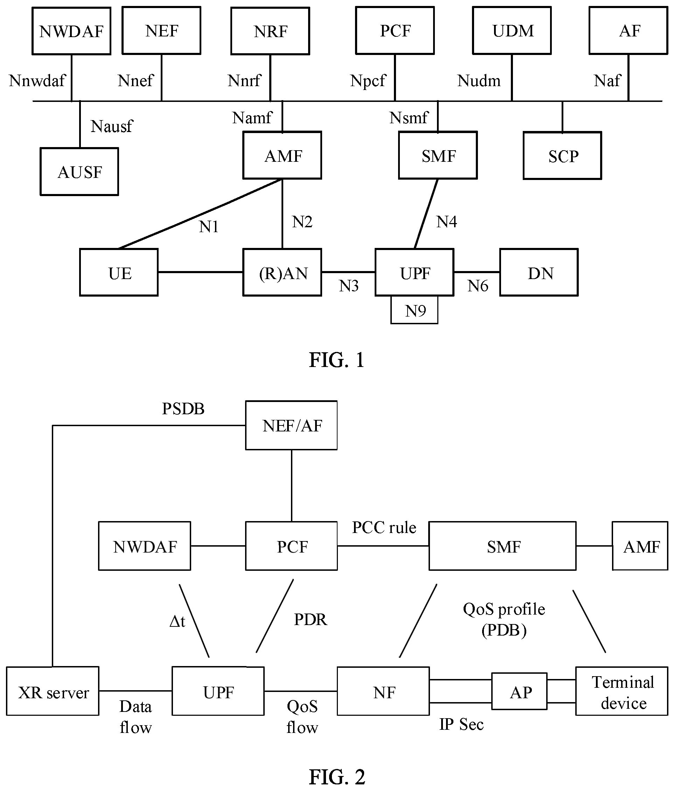

FIG. 1 is a diagram of an architecture of a 3GPP access 5G communication system according to an embodiment of this application. The architecture of the communication system may include a radio access network, a terminal device, and a core network. For example, in the architecture of the communication system, the radio access network may include a radio access network (radio access network, RAN) device. The core network may include a network exposure function (network exposure function, NEF) network element, a policy control function (policy control function, PCF) network element, a unified data management function (unified data management, UDM) network element, an application function (application function, AF) network element, an access and mobility management function (access and mobility management function, AMF) network element, a session management function (session management function, SMF) network element, a user plane function (user plane function, UPF) network element, a network data analytics function (network data analytics function, NWDAF) network element, a data network (data network, DN), an authentication server function (authentication server function, AUSF) network element, and the like. The network elements or devices may be connected through interfaces. Names of the interfaces shown in FIG. 1 are merely an example for description. This is not specifically limited in embodiments of this application. It should be understood that names of the network elements shown in FIG. 1 are merely an example for description herein, and do not constitute a limitation on a network element included in the architecture of the communication system. The following describes functions of the network elements or devices in the communication system in detail.

The terminal device may also be referred to as user equipment (user equipment, UE), a mobile station (mobile station, MS), a mobile terminal (mobile terminal, MT), or the like, and is a device that provides a user with voice and/or data connectivity. For example, the terminal device may include a handheld device that has a wireless connection function, a vehicle-mounted device, and the like. Currently, the terminal device may be a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in smart grid (smart grid), a wireless terminal in transportation safety (transportation safety), a wireless terminal in smart city (smart city), a wireless terminal in smart home (smart home), or the like. In FIG. 1, the terminal device is shown as UE, which is merely used as an example. No limitation is imposed on the terminal device.

The (R)AN device is a device that provides access for the terminal device, and includes a radio access network (radio access network, RAN) device and an access network (access network, AN) device. The RAN device is mainly a 3GPP network wireless network device, and the AN device may be an access network device defined in non-3GPP. The RAN device is mainly responsible for functions such as radio resource management, quality of service (quality of service, QoS) management, and data compression and encryption on an air interface side. The access network device may include base stations in various forms, for example, a macro base station, a micro base station (also referred to as a small cell), a relay station, and an access point. In systems using different radio access technologies, names of devices having a base station function may vary. For example, in a 5G system, the device is referred to as a RAN or gNB (5G NodeB) device.

The following describes functions of network elements in the core network in detail.

The access and mobility management function network element may be configured for access control and mobility management of a terminal device. In actual application, the access and mobility management function network element includes a mobility management function of a mobility management entity (mobility management entity, MME) in a long term evolution (long term evolution, LTE) network architecture, and includes an access management function. The access and mobility management function network element may be specifically responsible for registration of the terminal device, mobility management, a tracking area update procedure, reachability detection, selection of a session management function network element, mobility state transition management, and the like. For example, in 5G, the access and mobility management function network element may be an AMF network element, for example, as shown in FIG. 1. In future communication, for example, in 6G, the access and mobility management function network element may still be an AMF network element or have another name. This is not limited in this application. When the access and mobility management function network element is the AMF network element, the AMF may provide an Namf service.

The session management function network element may be configured to be responsible for session management (including session establishment, modification, and release) of the terminal device, selection and reselection of a user plane function network element, internet protocol (internet protocol, IP) address allocation of the terminal device, quality of service (quality of service, QoS) control, and the like. For example, in 5G, the session management function network element may be an SMF network element, for example, as shown in FIG. 1. In future communication, for example, in 6G, the session management function network element may still be an SMF network element or have another name. This is not limited in this application. When the session management function network element is the SMF network element, the SMF may provide an Nsmf service.

The user plane function network element is responsible for forwarding and reception of user data in the terminal device. The user plane function network element may receive user data from a data network, and transmit the user data to the terminal device through the access network device. The UPF network element may further receive the user data from the terminal device through the access network device, and forward the user data to the data network. Transmission resources and scheduling functions that are used by the UPF network element to provide services for the terminal device are managed and controlled by the SMF network element. For example, in 5G, the user plane function network element may be a UPF network element, for example, as shown in FIG. 1. In future communication, for example, in 6G, the user plane function network element may still be a UPF network element or have another name. This is not limited in this application.

The policy control function network element mainly supports a unified policy framework to govern network behavior and provides policy rules to a control plane network function, and is responsible for accessing user subscription information for policy decisions. For example, in 5G, the policy control function network element may be a PCF network element, for example, as shown in FIG. 1. In future communication, for example, in 6G, the policy control function network element may still be a PCF network element or have another name. This is not limited in this application. When the policy control function network element is the PCF network element, the PCF network element may provide an Npcf service.

The network exposure function network element mainly supports secure interaction between the 3GPP network and a third-party application. For example, in 5G, the network exposure function network element may be an NEF network element (including a local (local) NEF), for example, as shown in FIG. 1. In future communication, for example, in 6G, the network exposure function network element may still be an NEF network element or have another name. This is not limited in this application. When the network exposure function network element is the NEF, the NEF may provide an Nnef service for another network function network element. The core network can provide capability exposure information for the AF through the NEF.

The application function network element mainly supports interacting with a 3GPP core network to provide services, for example, influence on traffic routing decision, a policy control function, or some third-party services provided for a network side. For example, in 5G, the application function network element may be an AF network element, for example, as shown in FIG. 1. In future communication, for example, in 6G, the application function network element may still be an AF network element or have another name. This is not limited in this application. When the application function network element is the AF network element, the AF network element may provide an Naf service. The AF may provide a service for the core network through the NEF.

The unified data management function network element is configured for generation of authentication credentials, user identification handling (for example, storage and management of permanent user identifiers), access authorization control, subscription data management, and the like. For example, in 5G, the unified data management function network element may be a UDM network element, for example, as shown in FIG. 1. In future communication, for example, in 6G, the unified data management function network element may still be a UDM network element or have another name. This is not limited in this application. When the unified data management function network element is the UDM network element, the UDM network element may provide an Nudm service.

The network data analytics function network element is configured to provide network data collection and analysis functions based on technologies such as big data and artificial intelligence.

The data network (data network, DN) is a service network that provides a data transmission service for a user, for example, a carrier service, an Internet (Internet), or a third-party service.

The authentication server provides authentication services.

The UE may access the DN by using a protocol data unit (protocol data unit, PDU) session established between the UE and the DN.

Each network element in the core network may also be referred to as a functional entity or device, and may be a network element implemented on dedicated hardware, a software instance running on dedicated hardware, or an instance of a virtualized function on an appropriate platform. For example, the virtualization platform may be a cloud platform.

It should be noted that the architecture of the communication system shown in FIG. 1 is not limited to including only the network elements shown in the figure, and may further include another device not shown in the figure. Examples are not enumerated in this application.

It should be noted that a distribution form of the network elements is not limited in embodiments of this application. The distribution form shown in FIG. 1 is merely an example, and is not limited in this application.

For ease of description, in this application, the network elements shown in FIG. 1 are used as examples for description below, and an XX network element is directly referred to as XX for short. For example, the SMF network element is referred to as an SMF for short. It should be understood that names of all network elements in this application are merely used as examples, and may also be referred to as other names in future communication, or the network element in this application may be replaced by another entity or device that has a same function in future communication. This is not limited in this application. Unified descriptions are provided herein, and details are not described below again.

In the 3GPP access communication system shown in FIG. 1, the RAN/UPF supports data packet identification at QoS granularity. Scheduling of each QoS flow is independent of each other. Based on the communication system, PDU set identification, processing, and the like may include the following processes:
(1) The AF provides the PCF with flow characteristic information (protocol description) (indicating a transmission protocol complied with) and/or a QoS parameter (parameters) related to the PDU set. The flow characteristic information may indicate the transmission protocol complied with, and the QoS parameter indicates a QoS requirement to be met.
(2) The PCF generates a policy and charging control (policy control and charging, PCC) rule (rules) corresponding to the PDU set based on the information provided by the AF, and sends the rule to the SMF.
(3) The SMF determines, based on the PCC rule from the PCF, a QoS profile (profile) of the QoS parameter that meets the requirement of the AF and a packet detection rule of the PDU set, sends the QoS profile to the RAN, and sends the packet detection rule to the UPF.
(4) When receiving a data flow, the UPF may identify, based on the packet detection rule, data packets belonging to a same PDU set in the data flow, include PDU set information (PDU set information, PSI) in a general packet radio service tunneling protocol (general packet radio service tunneling protocol, GTP)-U header of the data packet, and transfer the data flow to the RAN.
(5) The RAN may identify, based on the PDU set information in the data packet in the received data flow, data packets belonging to a same PDU set, and may perform scheduling processing at PDU set granularity on received data packets based on the QoS parameter.

The foregoing method is applicable to a 3GPP access network device (for example, a RAN or an NG-RAN) that supports data packet scheduling processing at PDU set granularity. However, there may also be an access network device that cannot support data packet scheduling processing at PDU set granularity in a 3GPP access communication system. Such access network devices cannot perform scheduling processing at PDU set granularity according to the foregoing method. Therefore, PDU set processing based on a delay budget corresponding to the PDU set cannot be ensured, resulting in degraded communication quality.

In addition, the PDU set processing in the foregoing method is centralized on a 3GPP access network, with an access point being a RAN and being a 3GPP access point. After the foregoing solution is extended to a non-3GPP access network, the RAN is replaced by a non-3GPP access point, network function (network function, NF) network element, and the like. The non-3GPP access point may be, for example, Bluetooth or wireless fidelity (wireless fidelity, Wi-Fi), and the NF may be, for example, a non-3GPP interworking function (non-3GPP inter working function, N3IWF).

Refer to FIG. 2. An architecture of a non-3GPP access communication system according to an embodiment of this application may include an XR server (server), an NEF/AF, a UPF, an NWDAF, a PCF, an SMF, an AMF, an NF, an AP, and a terminal device. Optionally, the communication system may further include another core network element shown in FIG. 1, for example, a UDM. For functions of core network elements such as the NEF/AF, the UPF, the NWDAF, the PCF, the SMF and the AMF, refer to corresponding descriptions in the foregoing embodiment. Details are not described herein again.

In the foregoing non-3GPP communication system, the NF may be an N3IWF, a trusted non-3GPP gateway function (trusted non-3GPP gateway function, TNGF), a trusted wireless local area network (wireless local area network, WLAN) interworking function (trusted WLAN interworking function, TWIF), a wireless access gateway function (wireline access gateway function, W-AGF), a base station, or the like.

In the following embodiments, when an XX network element or device is an execution body for an operation, it may be understood that the XX network element or device performs the operation, or may be understood that a processor, a chip, a functional module, or the like in the XX network element or device performs the operation. For example, an operation performed by an access network device may be understood as being performed by the access network device, or may be understood as being performed by a processor, a chip, or a functional module in the access network device.

It should be noted that, in the following embodiments, an example in which an AF directly interacts with a network element in a core network is used for description in some descriptions. It should be understood that when the AF is a third-party AF, the AF may interact with a network element in the core network via an NEF. Similarly, the network element in the core network may also interact with the AF via the NEF.

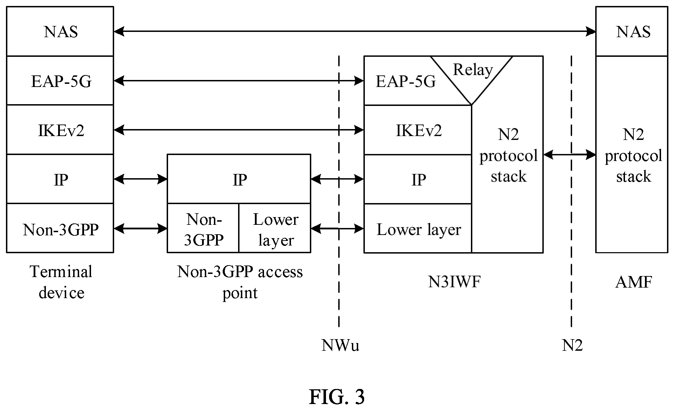

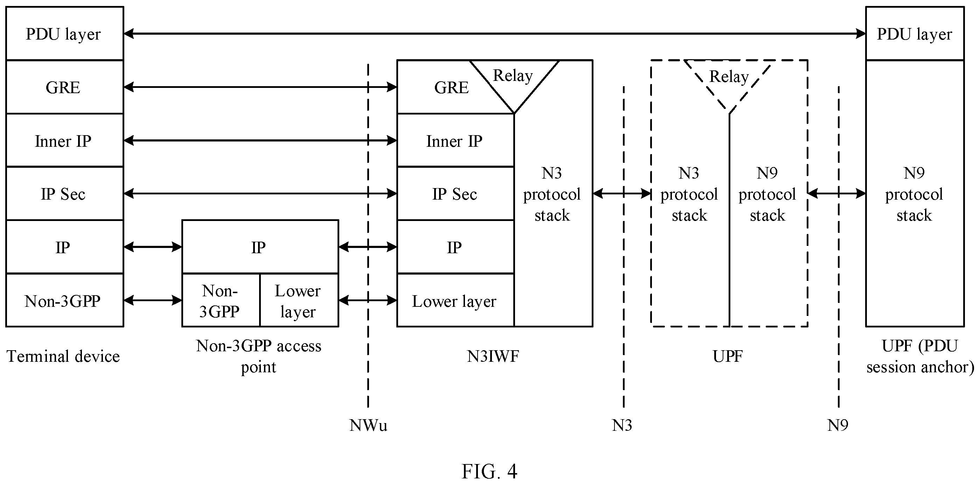

Based on the non-3GPP access communication system, an example in which the NF is an N3IWF is used. The network architecture of the non-3GPP access communication system may include the network architecture shown in FIG. 3 or FIG. 4. FIG. 3 shows a control plane network architecture, and FIG. 4 shows a user plane network architecture. It can be learned from FIG. 3 or FIG. 4 that, in non-3GPP access, the non-3GPP access point and the N3IWF may implement a forwarding function of a RAN in 3GPP. A wireless connection may be present between the UE and the non-3GPP access point, and a wired connection may be present between the non-3GPP access point and the N3IWF. If the N3IWF changes to another type of network element or device above that is an NF, the access point changes to a corresponding type of access point, and other processing logic is the same as that in the foregoing method.

An example in which the NF is an N3IWF is used. When a PDU set is processed in a non-3GPP access communication system, a processing method of a core network element such as an AF, a PCF, a UPF, an SMF, or an AMF is the same as or similar to the processing method in the foregoing 3GPP access communication system. Details are not described below again. In a process of transmitting a data flow of a service, the XR server may send the data flow of the service to the UPF. The data flow includes a PDU set, and the PDU set includes at least one data packet. The UPF may receive the data flow, and send the PDU set in the data flow to the N3IWF by using a QoS flow. The N3IWF may create, based on a QoS parameter of the QoS flow delivered by the SMF, an internet protocol security (internet protocol security, IP Sec) tunnel used to transmit the PDU set. Each IP Sec tunnel corresponds to at least one QoS flow, and each IP Sec tunnel is created based on a QoS parameter of at least one QoS flow. Data carried in the QoS flow (for example, a data packet in the PDU set) is transmitted over a corresponding IP Sec tunnel. Each IP Sec tunnel corresponds to one differentiated services code point (differentiated services code point, DSCP) value. The DSCP value is determined based on the QoS parameter of the QoS flow corresponding to the IP Sec tunnel when the IP Sec tunnel is created. The N3IWF may identify, based on PSI in a data packet in a received QoS flow, data packets belonging to a same PDU set, and perform scheduling processing at PDU set granularity on the data packet based on a QoS parameter requirement after including the PSI in a GTP-U header of the data packet. Specifically, the scheduling processing may be scheduling processing based on a PDU set delay budget (PDU set delay budget, PSDB) that meets the QoS parameter requirement. The N3IWF may add, to data packets belonging to a same PDU set, a QFI of a QoS flow that meets a PSDB requirement of the PDU set, to distribute the data packets belonging to the same PDU set to the QoS flow (that is, an IP Sec tunnel corresponding to the QoS flow) that meets the PSDB requirement of the PDU set for transmission, to send the data packet of the PDU set to the access point (access point, AP). The access point AP may perform scheduling processing on the received data packet. The scheduling processing refers to scheduling an appropriate resource to send the data packet to the terminal device.

It may be determined, based on the network architectures shown in FIG. 3 and FIG. 4, that the AP supports only the IP protocol. Therefore, after receiving the data packet from the N3IWF, the AP cannot identify the PSI carried in the GTP-U header of the data packet. In other words, the N3IWF can receive the PSI from the UPF, but cannot successfully transfer the PSI to the AP. Therefore, the AP cannot identify data packets belonging to a same PDU set. As a result, for data packets belonging to a same PDU set, the AP cannot perform scheduling processing that meets a PSDB requirement of the PDU set, and for a single data packet, can simply perform scheduling processing that meets a packet delay budget (packet delay budget, PDB) requirement of the data packet. In other words, the AP cannot perform QoS flow processing at PDU set granularity, but can simply perform QoS flow processing at data packet granularity. The PDB is an upper bound of a transmission delay of a data packet between the UPF and the UE, and the PDB may be determined based on the QoS parameter.

In the foregoing method, the N3IWF performs QoS flow processing at PDU set granularity, which is different from the granularity at which the AP performs QoS flow processing. Consequently, effect of transmission delay control for a PDU set is affected, resulting in degraded communication quality.

Based on the foregoing problem, this application provides a communication method, a communication apparatus, and a communication system, to resolve a problem that communication quality is degraded because a network element or device related to an access network and a network element or device related to a core network perform QoS flow processing at different granularities. According to the solutions provided in this application, effect of transmission delay control for a PDU set can be improved, improving communication quality of a communication system.

Optionally, the communication method provided in embodiments of this application may be applied to the 3GPP access communication system shown in FIG. 1, or may be applied to the non-3GPP access communication system shown in FIG. 2. The following mainly uses application to the non-3GPP access communication system as an example to describe in detail the communication method provided in embodiments of this application. A communication method applied to the 3GPP access communication system may be obtained by replacing the first device and the AP described below with the access network device in the 3GPP access communication system. Details are not described in embodiments of this application.

Based on the communication system shown in FIG. 2, in some embodiments of this application, the data flow received by the UPF from the XR server may include at least one PDU set. The UPF may perform at least one of the following Processing 1 to Processing 4 for each of the at least one PDU set.

Processing 1: Record reception moment information in a data packet of the PDU set. Further, the reception moment information may indicate a moment at which the UPF receives the data packet, and may be specifically a moment at which the UPF receives the data packet on an N6 interface.

Optionally, the reception moment information may be recorded in a packet header of the data packet.

Optionally, the data packet may be each data packet in the PDU set, a 1^{st} data packet in the PDU set, or a last data packet in the PDU set. In other words, the UPF may record the reception moment information in each data packet in the PDU set, the 1^{st} data packet in the PDU set, or the last data packet in the PDU set.

Processing 2: Record time difference information in a data packet of the PDU set. The time difference information indicates a time difference between receptions, by the UPF, of a 1^{st} data packet (which may also be referred to as an initial data packet or an initial packet) and a last data packet (which may also be referred to as a tail packet) in the PDU set.

The time difference indicated by the time difference information may be used as a reception delay of the PDU set at the UPF. The UPF may determine, based on a moment of receiving the 1^{st} data packet in the PDU set and a moment of receiving the last data packet in the PDU set, the time difference (Δt) between receptions, by the UPF, of the 1^{st} data packet and the last data packet in the PDU set.

Optionally, the time difference information may be recorded in a packet header of the data packet. Optionally, the data packet may be the last data packet in the PDU set. In other words, the time difference information may be recorded in the last data packet in the PDU set. Optionally, the time difference information may also be recorded in a null packet sent by the UPF to an NF. In a possible manner, after determining the time difference information of the PDU set, the UPF constructs a null packet, and includes the time difference information in a header of the null packet.

Processing 3: Record reception delay information in a data packet of the PDU set. The reception delay information may be the time difference information in Processing 2, the reception delay information may be a value interval to which the time difference determined in Processing 2 belongs, the reception delay information may be an identifier of a value interval to which the time difference determined in Processing 2 belongs, or the reception delay information may be a delay corresponding to a value interval to which the time difference determined in Processing 2 belongs, where different value intervals correspond to different delays.

The data packet may be a last data packet in the PDU set. Optionally, the reception delay information may be recorded in a packet header of the data packet. Optionally, the reception delay information may also be recorded in a null packet sent by the UPF to an NF. In a possible manner, after determining the reception delay information of the PDU set, the UPF constructs a null packet, and includes the reception delay information in a header of the null packet.

In some embodiments of this application, the delay corresponding to the value interval may be a specified value. Alternatively, the delay corresponding to the value interval may be determined based on a value in the value interval. For example, the delay corresponding to the value interval may be an upper bound value of the value interval. For another example, the delay corresponding to the value interval may be an average value of values included in the value interval. Different delays are set for different value intervals, so that a correspondence between different value intervals and different delays may be established, and the reception delay information of the PDU set may be determined based on the correspondence. It may be considered that delays corresponding to different value intervals are classified into different levels of the time difference or the reception delay of the PDU set, each value interval corresponds to one level, and a time difference included in each value interval belongs to a level corresponding to the value interval.

For example, a possible correspondence between the value interval and the delay is shown in Table 1:

| Value interval | Delay corresponding to the value interval |
|---|---|
| [0, 3] | 3 |
| (3, 6] | 6 |
| (6, 9] | 9 |
| ... | ... |

In Table 1, the value interval [0, 3] includes values greater than or equal to 0 and less than or equal to 3, the value interval (3, 6] includes values greater than 3 and less than or equal to 6, and the value interval (6, 9] includes values greater than 6 and less than or equal to 9.

Optionally, the data in the value interval and the delay corresponding to the value interval may be in ms. This is not specifically limited in embodiments of this application.

For example, when determining that the time difference between receptions of the 1^{st} data packet and the last data packet in the PDU set is 2 ms, the UPF may determine, based on the correspondence shown in Table 1, that the reception delay information of the PDU set is 3 ms, or determine that the reception delay information of the PDU set is the data interval [0, 3].

Processing 4: Add a null packet after the PDU set, and record reception delay information in the null packet, where the reception delay information may be the time difference information described in Processing 2.

In some embodiments of this application, when a quantity of the at least one PDU set is greater than 1, that is, when the data flow received by the UPF from the XR server includes multiple PDU sets, the UPF may perform the following Processing 5 or Processing 6 for the multiple PDU sets.

Processing 5: Record reception delay information in a data packet in a last PDU set of multiple PDU sets.

Optionally, the reception delay information may be recorded in a packet header of the data packet. Optionally, the data packet may be a last data packet in the PDU set to which the data packet belongs. In other words, the reception delay information may be recorded in the last data packet in the last PDU set of the multiple PDU sets.

In this processing manner, the reception delay information may include at least one of the following:
(1) Maximum time difference in multiple time differences.
(2) Minimum time difference in multiple time differences.
(3) Average time difference of multiple time differences.

The multiple time differences include a time difference of each of the multiple PDU sets, and the time difference of each PDU set is a time difference between receptions, by the UPF, of a 1^{st} data packet and a last data packet in the PDU set.

Processing 6: Add a null packet after multiple PDU sets, and record reception delay information in the null packet. The reception delay information may be the reception delay information described in Processing 5.

In some embodiments of this application, the at least one PDU set or the multiple PDU sets may be received by the UPF in a first time period.

In some embodiments of this application, the reception delay information may be used as reception delay information of a corresponding PDU set, may be used as reception delay information of each of multiple corresponding PDU sets, or may be used as reception delay information of each PDU set in a data flow.

In some embodiments of this application, after processing the at least one PDU set in the received data flow in at least one of the foregoing processing manners in Processing 1 to Processing 6, the UPF may transmit the PDU set to an NF by using a QoS flow. For example, the NF may be an N3IWF, a trusted non-3GPP gateway function (trusted non-3GPP gateway function, TNGF), a trusted wireless local area network (wireless local area network, WLAN) interworking function (trusted WLAN interworking function, TWIF), a wireless access gateway function (wireline access gateway function, W-AGF), or the like. For a PDU set that is not processed according to the processing manners in Processing 1 to Processing 6, the UPF also transmits the PDU set to the NF by using a QoS flow. Optionally, when the method is applied to a 3GPP access communication system, the NF may be replaced with an access network device such as a base station.

In some embodiments of this application, the UPF may use information (for example, the foregoing receiving moments, time differences, and reception delay information) obtained through processing according to at least one of the foregoing processing manners in Processing 1 to Processing 6 as reception delay information and expose the reception delay information. Another network element in the core network may subscribe to or query the information from the UPF.

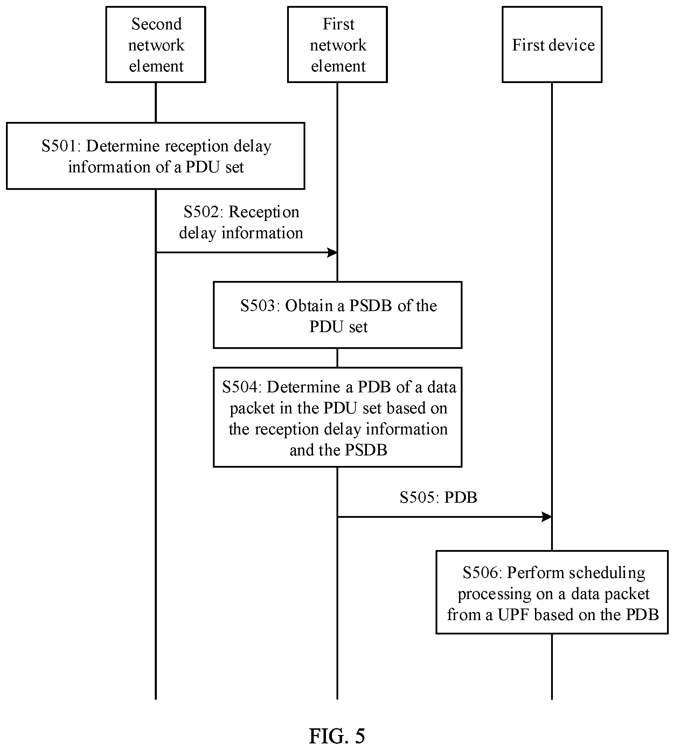

Based on the foregoing descriptions, a communication method according to an embodiment of this application is shown in FIG. 5, and includes the following steps.

S501: A second network element determines reception delay information of a PDU set.

The reception delay information indicates a reception delay of the PDU set at a UPF.

In some embodiments of this application, the second network element may be an NWDAF or a UPF.

When the second network element is an NWDAF, the second network element may obtain first reception delay information from the UPF. Alternatively, the second network element may obtain first reception moment information from the UPF, and determine second reception delay information based on the first reception moment information. The first reception moment information may include moments at which a 1^{st} data packet and a last data packet in each of at least one PDU set in a data flow received by the UPF arrive at the UPF. In this manner, the second network element may determine the second reception delay information based on the information obtained from the UPF and with reference to the processing manners described in Processing 1 to Processing 6. The first reception delay information is reception delay information determined by the UPF, and the second reception delay information is reception delay information determined by another network element other than the UPF based on information from the UPF (for example, the first reception moment information). For a specific determining manner, refer to the foregoing manners in Processing 1 to Processing 6. The first reception delay information may be the same as or different from the second reception delay information.

The reception delay information in this embodiment of this application may be the first reception delay information, or may be the second reception delay information. When the reception delay information is determined by the UPF or obtained from the UPF, the reception delay information is specifically the first reception delay information. When the reception delay information is determined by another network element other than the UPF, the reception delay information is specifically the second reception delay information.

When the second network element is a UPF, the second network element may determine the first reception delay information according to the processing manners described in Processing 1 to Processing 6.

S502: The second network element sends the reception delay information to a first network element.

When the second network element is an NWDAF or a UPF, the first network element may be a PCF and/or an SMF. When the second network element is a UPF, the first network element may be one or more of an NWDAF, a PCF, an SMF, or an AMF.

In some embodiments of this application, the first network element may obtain the first reception delay information or the second reception delay information from the second network element through subscription. Specifically, the first network element may subscribe to the reception delay information by sending a first message to the second network element, and receive the first reception delay information or the second reception delay information fed back by the second network element. The first message may include at least one of the following:
(1) An analytics identifier, used to identify analytics data that needs to be obtained, where the analytics data that needs to be obtained includes the reception delay information. The reception delay information may be the first reception delay information or the second reception delay information.

For example, the analytics identifier (Analytics ID) may be used as a "PDU set reception delay (PDU Set arrival offset)".

(2) Information indicating a terminal device associated with the reception delay information.

The terminal device may be a terminal device that receives the data flow.

For example, the information may be an identifier of the terminal device, for example, a subscription permanent identifier (subscription permanent identifier, SUPI) of the terminal device.

(3) Information indicating the data flow to which the PDU set belongs.

For example, the information may be a data flow identifier of the data flow to which the PDU set belongs. The information may be used to restrict a terminal device service data flow (restricts the scope of the UE service data flow) for which data analysis is performed, that is, to restrict a data flow for which statistics collection, analysis, and determining of reception delay information is performed. In a possible manner, the information may be SDF (service data flow) information, for example, a service data flow filter (service data flow filter), a service data flow template (service data flow template), IP 5-tuple information, or IP 3-tuple information. The IP 5-tuple information includes a source address, a source port number, a destination address, a destination port number, and a protocol type. The IP 3-tuple information includes a source address, a source port number, and a protocol type.

(4) Information indicating a data granularity of the reception delay information.

For example, the information may restrict a preferred data granularity level (preferred granularity level of offset info) for the reception delay information. For example, the data granularity may include a moment granularity, a time difference granularity, a delay granularity (that is, a time difference level granularity), and the like. Data at moment granularity may include various reception moments described in the foregoing embodiment. Data at time difference granularity may include various time differences described in the foregoing embodiment. Data at delay granularity may include a delay corresponding to a value interval described in the foregoing embodiment.

(5) Information indicating an arrangement order of feedback information of the second network element.

The information is used to restrict a preferred arrangement order (preferred order of results) of information fed back by the second network element to the first network element.

For example, the feedback information may include a time difference, a maximum time difference, a minimum time difference, an average time difference, and the like. Optionally, the feedback information may further include other related information such as a data flow identifier, and the foregoing arrangement order may be an arrangement order for the feedback information.

(6) A quantity of PDU sets used to determine the reception delay information.

The second network element may feed back, to the first network element based on the information, obtained reception delay information determined based on the quantity of PDU sets.

(7) Information indicating a first time period, where one or more PDU sets that arrive at the UPF in the first time period are used to determine the reception delay information.

The second network element may feed back, to the first network element based on the information, obtained reception delay information determined based on the PDU set received by the UPF in the first time period.

The second network element may send the reception delay information to the first network element after receiving the first message. Specifically, the second network element may send the reception delay information to the first network element in a manner of sending, to the first network element, first information indicating the reception delay information.

S503: The first network element obtains a PSDB of the PDU set.

The PSDB indicates an upper bound of a transmission delay of the PDU set between the UPF and the terminal device.

In some embodiments of this application, the first network element may determine the PSDB based on a QoS parameter provided by a network element in a core network. For a process in which the first network element obtains the QoS parameter provided by the network element in the core network, refer to the content related to FIG. 1 in the foregoing embodiment. Details are not described herein again. The QoS parameter may include: a PSDB, a PDU set error rate (PDU set error rate, PSER), and/or PDU set integrated handling information (PDU set integrated handling information, PSIHI).

S504: The first network element determines a PDB of a data packet in the PDU set based on the reception delay information and the PSDB.

The PDB indicates an upper bound of a transmission delay of a data packet between the UPF and the terminal device.

In an optional implementation, the first network element may use a difference between the PSDB and the reception delay information as the PDB. The PDB may be used as a PDB of each data packet in the PDU set, or may be used as a PDB parameter requirement of a QoS flow in which the data packet is located.

For example, when the PSDB of the PDU set is 10 milliseconds (ms), the upper bound of the transmission delay of the PDU set from the UPF to the terminal device is 10 ms. If the reception delay information is a time difference between arrivals, at the UPF, of the 1^{st} data packet and the last data packet in the PDU set, and a value of the time difference is 4 ms, the first network element may determine that the PDB of the data packet in the PDU set is 6 ms.

S505: The first network element sends the PDB to a first device.

The first device may be an NF, and the NF may be, for example, an N3IWF, a TNGF, a TWIF, a W-AGF, or an access network device (a RAN or an NG-RAN).

In some embodiments of this application, the first network element may send the PDB to the first device via a third network element. The third network element includes one or more of a PCF, an SMF, or an AMF. For example, when the first network element is an NWDAF, the first network element may send the PDB to the first device via a PCF.

S506: The first device performs scheduling processing on a data packet from the UPF based on the PDB.

In some embodiments of this application, the data packet received by the first device from the UPF may carry reception moment information, and the reception moment information indicates a moment at which the UPF receives the data packet. The first device may determine a remaining delay budget based on the PDB and the reception moment information, and perform scheduling processing on the data packet based on the remaining delay budget. The remaining delay budget indicates an upper bound of a transmission delay of a data packet between the first device and the terminal device. Optionally, if the data packet from the UPF does not carry the reception moment information, the first device may transmit the data packet based on a requirement of the PDB.

Specifically, the first device may first determine a time difference between a first reception moment and a second reception moment, and then use a difference between the PDB and the time difference as the remaining delay budget. The first reception moment is a moment at which the first device receives the data packet, and the second reception moment is a reception moment indicated by the reception moment information.

When performing scheduling processing on the data packet based on the remaining delay budget, the first device may transmit the data packet to an access point AP over an IP Sec tunnel that corresponds to the remaining delay budget in multiple IP Sec tunnels. The access point AP may perform scheduling processing on the data packet, that is, transmit the data packet to the terminal device over a corresponding IP Sec tunnel.

Each IP Sec tunnel can carry at least one QoS flow, and each IP Sec tunnel corresponds to one DSCP value. When transmitting the data packet over the IP Sec tunnel, the first device may include, in an IP protocol field of the data packet, the DSCP value corresponding to the IP Sec tunnel. The access point AP may select, based on the DSCP value included in the data packet, the corresponding IP Sec tunnel to transmit the data packet to the terminal device.

In the foregoing method, the first network element and the second network element may jointly determine a PDB corresponding to a data packet in a PDU set, and transmit the PDB to the first device such as an N3IWF, so that the first device can perform scheduling processing at data packet granularity on the data packet, ensuring a processing granularity same as that of the AP, improving effect of transmission delay control for a PDU set, and improving communication quality.

In the foregoing method, when the reception delay information is various time differences described in the foregoing embodiment, all data packets in the PDU set correspond to same reception delay information, and a PDB determined based on the reception delay information is applicable to at least all the data packets in the PDU set. In other words, the PDB determined based on the reception delay information may be used for scheduling processing on all the data packets in the PDU set.

For example, a PDU set includes three data packets, namely, data packets 1 to 3, and a PSDB corresponding to the PDU set is 10 ms. It is assumed that moments at which the three data packets arrive at the UPF are a 1^{st} ms, a 3^{rd} ms, and a 5^{th} ms respectively. When the reception delay information is the time difference between arrivals, at the UPF, of the 1^{st} data packet and the last data packet in the PDU set, the UPF may determine that the reception delay information of the PDU set is 4 ms. After the reception delay information is transferred to the first network element according to the method shown in FIG. 5, the first network element may determine that a PDB corresponding to the data packets 1 to 3 is 6 ms. After the first network element sends the PDB to the first device, when receiving data packets in the PDU set and the data packets 1 to 3, the first device may separately perform scheduling processing on the data packets 1 to 3 based on a PDB requirement of 6 ms. When the PDB is used as a PDB of each data packet in a QoS flow in which the PDU set is located, the first device may separately perform scheduling processing on each data packet in the QoS flow based on a PDB requirement of 6 ms.

In some embodiments of this application, the UPF may not determine the reception delay information according to the method in the foregoing embodiment, but may separately determine, based on a manner being "different data packets in the PDU set may correspond to different reception delay information", reception delay information corresponding to each data packet in the PDU set. The reception delay information corresponding to each data packet indicates a reception delay that corresponds to the data packet and that is of a PDU set to which the data packet belongs at the UPF. The second network element may obtain, from the UPF, the reception delay information corresponding to each data packet in the PDU set, and send the reception delay information corresponding to each data packet to the first network element. The first network element may determine, based on the PSDB of the PDU set and the reception delay information corresponding to each data packet in the PDU set, a PDB corresponding to each data packet in the PDU set, and send the PDB corresponding to each data packet to the first device, so that the first device performs scheduling processing on each data packet based on the PDB corresponding to each data packet.

In the method, a manner of determining the reception delay information corresponding to each data packet may be: using a time difference between a moment at which the data packet arrives at the UPF and a moment at which the 1^{st} data packet in the PDU set to which the data packet belongs arrives at the UPF as the reception delay information corresponding to the data packet. The moment at which the data packet arrives at the UPF is a moment at which the UPF receives the data packet. The UPF may determine the reception delay information corresponding to each data packet in this manner.

In this manner, a manner of determining the PDB corresponding to each data packet may be: using a difference between the PSDB of the PDU set to which the data packet belongs and the reception delay information corresponding to the data packet as the PDB corresponding to the data packet.

For example, a PDU set includes three data packets, namely, data packets 1 to 3, and a PSDB corresponding to the PDU set is 10 ms. It is assumed that moments at which the three data packets arrive at the UPF are a 1^{st} ms, a 3^{rd} ms, and a 5^{th} ms respectively. In this case, the UPF may determine that reception delay information corresponding to the data packet 1 is 0 ms, reception delay information corresponding to the data packet 2 is 2 ms, and reception delay information corresponding to the data packet 3 is 4 ms. After the reception delay information corresponding to each data packet is transferred to the first network element according to the method shown in FIG. 5, the first network element may determine that a PDB corresponding to the data packet 1 is 10 ms, a PDB corresponding to the data packet 2 is 8 ms, and a PDB corresponding to the data packet 3 is 6 ms. After the first network element sends the PDB corresponding to each data packet to the first device, when receiving the data packet 1, the first device may perform scheduling processing on the data packet 1 based on a PDB requirement of 10 ms. When receiving the data packet 2, the first device may perform scheduling processing on the data packet 1 based on a PDB requirement of 8 ms. When receiving the data packet 3, the first device may perform scheduling processing on the data packet 1 based on a PDB requirement of 6 ms.

In some embodiments of this application, the PSDB of the PDU set in the method shown in FIG. 5 may be replaced with a QoS parameter of the PDU set (for example, the PSER or the PSIHI), the reception delay information may be replaced with reference information used to convert the QoS parameter of the PDU set into a QoS parameter corresponding to a data packet in the PDU set, and the PDB may be replaced with reference information of the QoS parameter corresponding to the data packet in the PDU set. In other words, the second network element may obtain the reference information used to convert the QoS parameter of the PDU set (for example, the PSER or the PSIHI) into the QoS parameter corresponding to the data packet in the PDU set, and transfer the reference information to the first network element. The first network element may convert, based on the reference information, the QoS parameter of the PDU set into the QoS parameter corresponding to the data packet in the PDU set, and transfer the QoS parameter corresponding to the data packet to the first device. The first device may perform scheduling processing on the data packet based on the QoS parameter corresponding to the data packet.

In an example, the QoS parameter is the PSER. When the second network element is an NWDAF, and the first network element is a PCF/SMF, the PCF/SMF may obtain, from the NWDAF, reference information used to convert the PSER of the PDU set into a PSER corresponding to a data packet in the PDU set, convert, based on the reference information, the PSER of the PDU set into the PSER corresponding to the data packet in the PDU set, and send the PSER corresponding to the data packet in the PDU set to the first device, so that the first device performs scheduling processing on the data packet based on the PSER corresponding to the data packet in the PDU set.

For a specific implementation of the foregoing method, refer to the method shown in FIG. 5. Details are not described herein again.

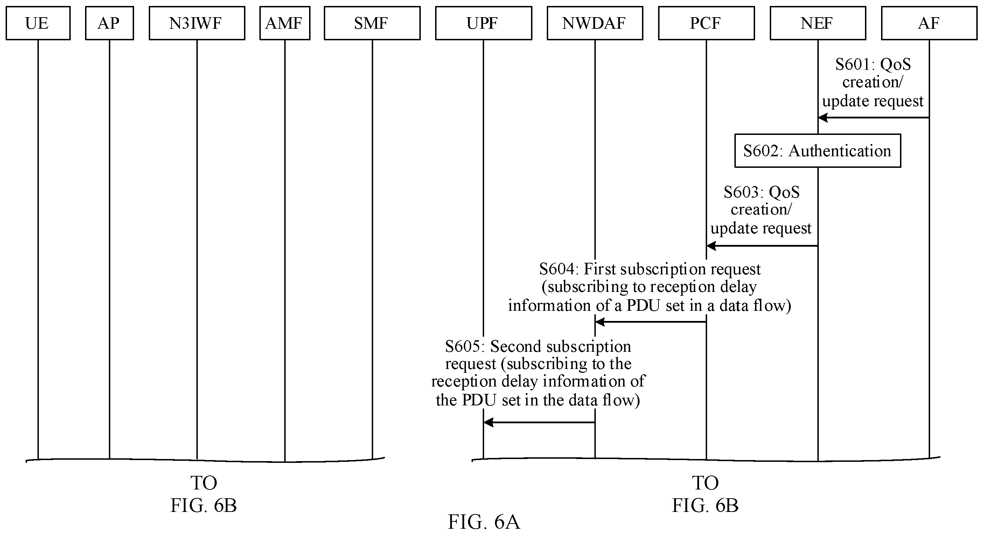

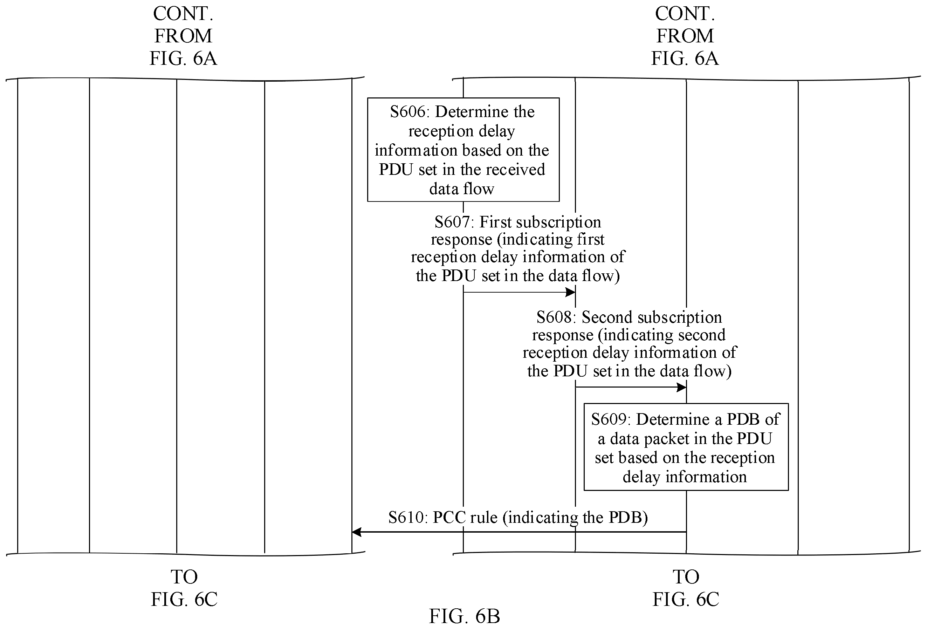

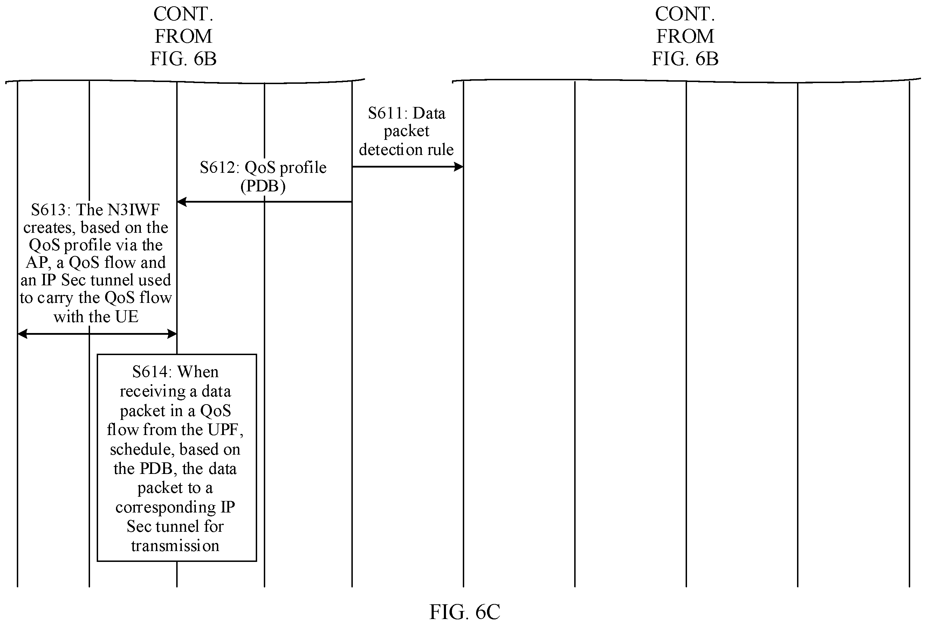

Based on the foregoing description, by using an example in which the first network element is a PCF, the second network element is an NWDAF, the first device is an N3IWF, and the terminal device is UE, the following describes in detail an execution procedure of the communication method shown in FIG. 5 with reference to the non-3GPP access communication system shown in FIG. 2. For example, refer to FIG. 6A to FIG. 6C. The procedure may include the following steps.

S601: An AF sends a QoS creation/update request to an NEF.

In some embodiments of this application, before step S601, optionally, UE may complete network registration, and send a data connection session (for example, a PDU session, where the PDU session is used as an example for subsequent description) creation request to an AMF. The data connection session creation request is used to request to create a data connection session. For example, the data connection session is a PDU session. The data connection session creation request may be a PDU session creation request, and the PDU session creation request is used to request to create the PDU session.

Optionally, the QoS creation/update request may carry a QoS parameter requirement of a PDU set. The QoS parameter requirement may include a PSDB of a PDU set in the PDU session. To be specific, the QoS requirement includes a delay budget at PDU set granularity, and all PDU sets in a service data flow transmitted by using the PDU session need to meet the delay budget.

S602: The NEF authenticates the QoS creation/update request.

S603: The NEF sends the authenticated QoS creation/update request to the PCF.

S604: The PCF sends a first subscription request to the NWDAF, where the first subscription request is used to subscribe to reception delay information of a PDU set in a data flow.

In a possible implementation in some embodiments of this application, the PCF may initiate a request for analyzing information to the NWDAF based on an access type of the UE (namely, non-3GPP access). Specifically, the PCF may send a subscription request to the NWDAF, to request to obtain the reception delay information of the PDU set in the data flow transmitted in the PDU session. The first subscription request may be the first message in the foregoing embodiment. Details are not described herein again.

For example, the first subscription request sent by the PCF to the NWDAF may include any one or more of the analytics identifier, the data flow identifier, the data granularity level, or the arrangement order of information in the foregoing embodiment.

S605: The NWDAF sends a second subscription request to a UPF, where the second subscription request is used to subscribe to the reception delay information of the PDU set in the data flow.

In some embodiments of this application, after receiving the subscription request from the PCF, the NWDAF may send a subscription request to the UPF, to subscribe to, from the UPF, information monitoring at PDU set granularity of the data flow. The monitored information may include a reception delay of a PDU set, a moment at which a data packet in a PDU set arrives at the UPF, and the like. The monitored information may be used as the reception delay information or may be used to determine the reception delay information.

S606: The UPF determines the reception delay information based on the PDU set in the received data flow.

In some embodiments of this application, after receiving the subscription request from the NWDAF, the UPF may process the PDU set in the received data flow according to the processing manners described in Processing 1 to Processing 6 in the foregoing embodiments, and may feed back, to the NWDAF, information determined in the processing process as the reception delay information.

S607: The UPF sends a first subscription response to the NWDAF, where the first subscription response indicates first reception delay information of the PDU set in the data flow.

S608: The NWDAF sends a second subscription response to the PCF, where the second subscription response indicates second reception delay information of the PDU set in the data flow.

For example, the reception delay information fed back by the NWDAF to the PCF may include the time difference, the maximum time difference, the minimum time difference, the average time difference, or the like in the foregoing embodiment.

Optionally, the first subscription response and the second subscription response may further include identification information of the data flow.

S609: The PCF determines a PDB of the data packet in the PDU set based on the reception delay information.

The PCF may determine a PSDB based on a QoS parameter in the QoS creation/update request from the NEF, and then determine the PDB of the data packet in the PDU set based on the PSDB and the reception delay information from the NWDAF. The PCF may further generate a PCC rule based on information such as the QoS parameter and the PDB, where the PCC rule may indicate the PDB.

For example, the PCF may generate a minimum PDB based on the maximum time difference in the reception delay information, may generate a maximum PDB based on the minimum time difference in the reception delay information, and may generate an average PDB based on the average time difference in the reception delay information. Alternatively, a PDB corresponding to a data packet in a specific PDU set may be generated based on a time difference corresponding to the specific PDU set.

S610: The PCF sends the PCC rule to an SMF, where the PCC rule may indicate the PDB.

S611: The SMF sends a data packet detection rule to the UPF.

The SMF may generate a data packet detection rule (packet detection rule, PDR) for a downlink data packet according to the PCC rule from the PCF, and send the data packet detection rule to the UPF, so that the UPF identifies and processes the data packet in the PDU set according to the PDR. Optionally, the SMF may send the data packet detection rule to the UPF by using an N4 message. The SMF may further send a forwarding action rule (forwarding action rule) and the like to the UPF.

S612: The SMF sends a QoS profile to the N3IWF, where the QoS profile includes the PDB.

The QoS profile (profile) may include a PDB corresponding to a QoS flow that carries the PDU set. Optionally, the PDB may be used as a PDB of a data packet in the QoS flow. The QoS profile may further include a QoS flow identifier (QoS flow ID, QFI).

Optionally, the SMF may send the QoS profile to the N3IWF by using an N2 PDU session request.

Optionally, the SMF may send the QoS profile to the N3IWF via the AMF.

S613: The N3IWF creates, based on the QoS profile via an AP, a QoS flow and an IP Sec tunnel used to carry the QoS flow with the UE.

S614: When receiving a data packet in a QoS flow from the UPF, the N3IWF schedules, based on the PDB, the data packet to a corresponding IP Sec tunnel for transmission.

For a specific implementation process in which the N3IWF creates the IP Sec tunnel and performs data packet scheduling processing based on the PDB, refer to the method described in step S506. Details are not described herein again.

In the foregoing method, the PCF may subscribe to the reception delay information of the PDU set, and may more accurately determine the PDB of the data packet in the PDU set based on the reception delay information of the PDU set subscribed to, and transmit the PDB to the N3IWF via the SMF, so that the N3IWF can perform scheduling processing at data packet granularity on the data packet based on the PDB, ensuring a processing granularity same as that of the AP in a subsequent operation, and improving communication quality.

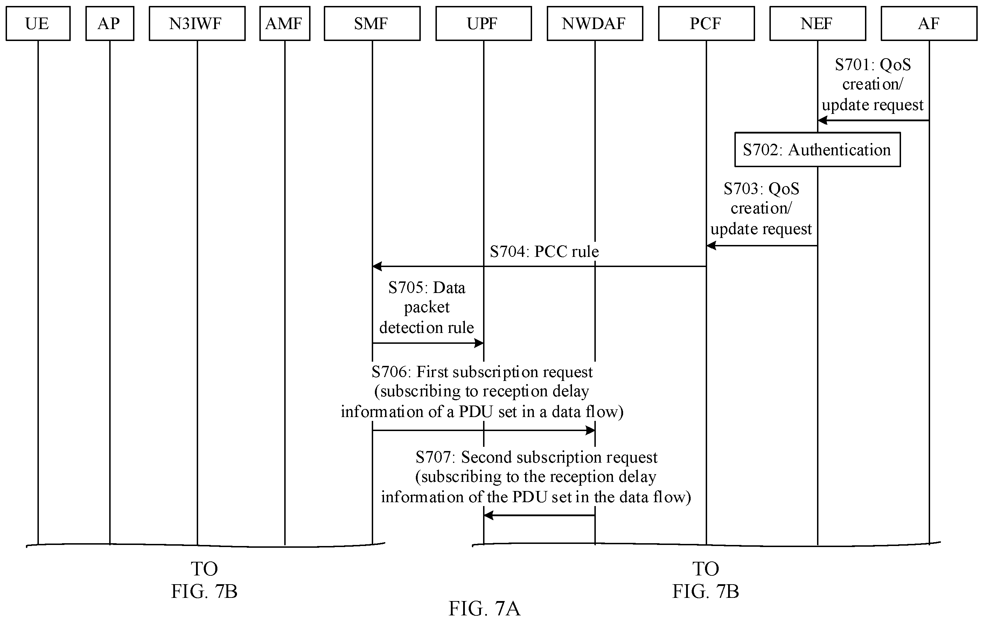

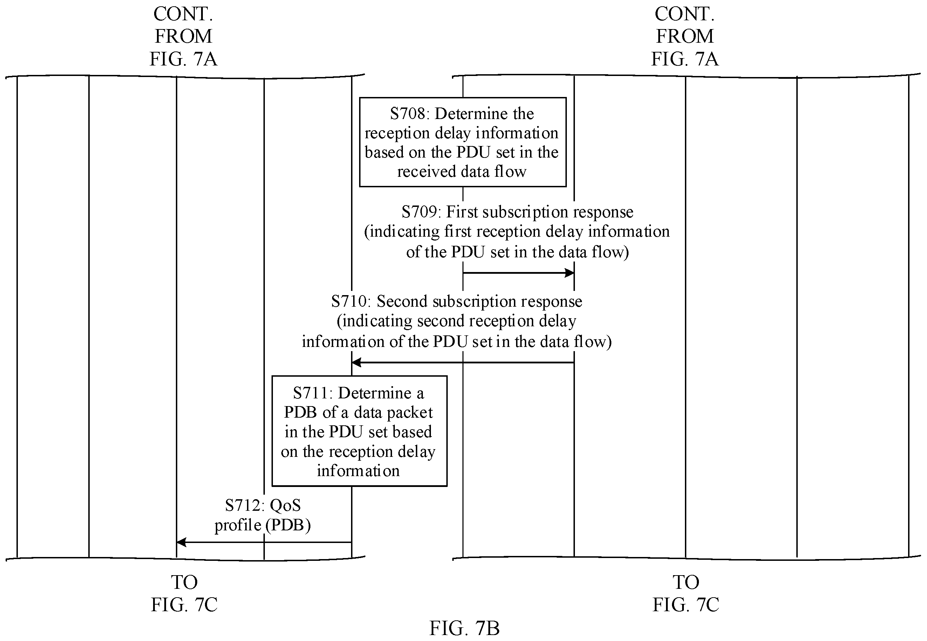

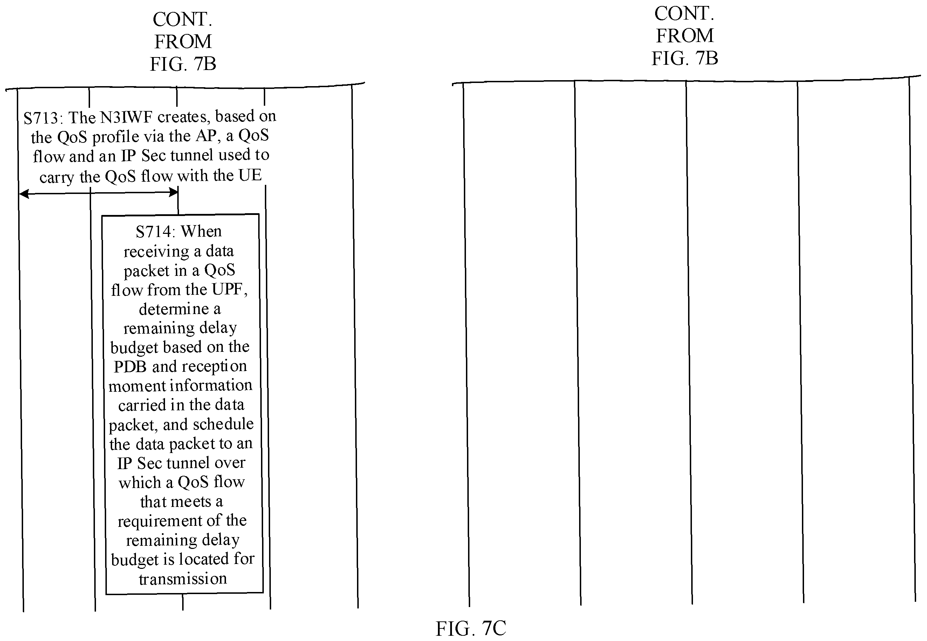

Based on the foregoing description, by using an example in which the first network element is an SMF, the second network element is an NWDAF, the first device is an N3IWF, and the terminal device is UE, the following describes in detail an execution procedure of the communication method shown in FIG. 5 with reference to the non-3GPP access communication system shown in FIG. 2. For example, refer to FIG. 7A to FIG. 7C. The procedure may include the following steps.

S701: An AF sends a QoS creation/update request to an NEF.

S702: The NEF authenticates the QoS creation/update request.

S703: The NEF sends the authenticated QoS creation/update request to a PCF.

For execution of steps S701 to S703, refer to the foregoing steps S601 to S603. Details are not described herein again.

S704: The PCF sends a PCC rule to the SMF.

The PCF may generate the PCC rule based on a QoS parameter requirement in the QoS creation/update request.

S705: The SMF sends a data packet detection rule to a UPF.

For this step, refer to the foregoing step S611. Details are not described herein again.

S706: The SMF sends a first subscription request to the NWDAF, where the first subscription request is used to subscribe to reception delay information of a PDU set in a data flow.

In a possible implementation in some embodiments of this application, the SMF may initiate a request for analyzing information to the NWDAF based on the PCC rule and/or an access type of the UE (namely, non-3GPP access). Specifically, the SMF may send a subscription request to the NWDAF, to request to obtain the reception delay information of the PDU set in the data flow. Optionally, the first subscription request may be the first message in the foregoing embodiment. Details are not described herein again.

Optionally, the first subscription request sent by the SMF to the NWDAF may further include any one or more of a UPF identifier, a QFI of a QoS flow to which the PDU set belongs, information indicating the data flow to which the PDU set belongs, or the like.

For example, the first subscription request sent by the SMF to the NWDAF may include any one or more pieces of information such as the analytics identifier, the data flow identifier, the QFI, or the data granularity level in the foregoing embodiment.

S707: The NWDAF sends a second subscription request to the UPF, where the second subscription request is used to subscribe to the reception delay information of the PDU set in the data flow.

S708: The UPF determines the reception delay information based on the PDU set in the received data flow.

S709: The UPF sends a first subscription response to the NWDAF, where the first subscription response indicates first reception delay information of the PDU set in the data flow.

S710: The NWDAF sends a second subscription response to the SMF, where the second subscription response indicates second reception delay information of the PDU set in the data flow.

Optionally, the first subscription response and the second subscription response may further include the QFI of the QoS flow of the PDU set.

For execution of steps S707 to S710, refer to the foregoing steps S605 to S608 for implementation. Details are not described herein again.

S711: The SMF determines a PDB of a data packet in the PDU set based on the reception delay information.

The SMF may determine a PSDB based on the PCC rule from the PCF, and then determine the PDB of the data packet in the PDU set based on the PSDB and the reception delay information from the NWDAF.

For example, the SMF may generate a minimum PDB based on the maximum time difference in the reception delay information, may generate a maximum PDB based on the minimum time difference in the reception delay information, and may generate an average PDB based on the average time difference in the reception delay information. Alternatively, a PDB corresponding to a data packet in a specific PDU set may be generated based on a time difference corresponding to the specific PDU set.

Optionally, the SMF may further generate multiple candidate QoS profiles and corresponding QFIs.

S712: The SMF sends the QoS profile to the N3IWF, where the QoS profile includes the PDB.

The QoS profile (profile) may include a PDB corresponding to a QoS flow that carries the PDU set. Optionally, the PDB may be used as a PDB of a data packet in the QoS flow. The QoS profile may further include a QoS flow identifier (QoS flow ID, QFI).

Optionally, the SMF may send the QoS profile to the N3IWF by using an N2 PDU session request. Optionally, the session request may further include multiple candidate QoS profiles and corresponding QFIs, a PDU session identifier, and the like.

S713: The N3IWF creates, based on the QoS profile via an AP, a QoS flow and an IP Sec tunnel used to carry the QoS flow with the UE.

S714: When receiving a data packet in a QoS flow from the UPF, the N3IWF determines a remaining delay budget based on the PDB and reception moment information carried in the data packet, and schedules the data packet to an IP Sec tunnel over which a QoS flow that meets a requirement of the remaining delay budget is located for transmission.

For a specific implementation process in which the N3IWF creates the IP Sec tunnel and performs data packet scheduling processing based on the PDB, refer to the method described in step S506. Details are not described herein again.

In the foregoing method, the SMF may subscribe to the reception delay information of the PDU set, and may more accurately determine the PDB of the data packet in the PDU set based on the reception delay information of the PDU set subscribed to, and transmit the PDB to the N3IWF, so that the N3IWF can perform scheduling processing at data packet granularity on the data packet based on the PDB, ensuring a processing granularity same as that of the AP in a subsequent operation, and improving communication quality.

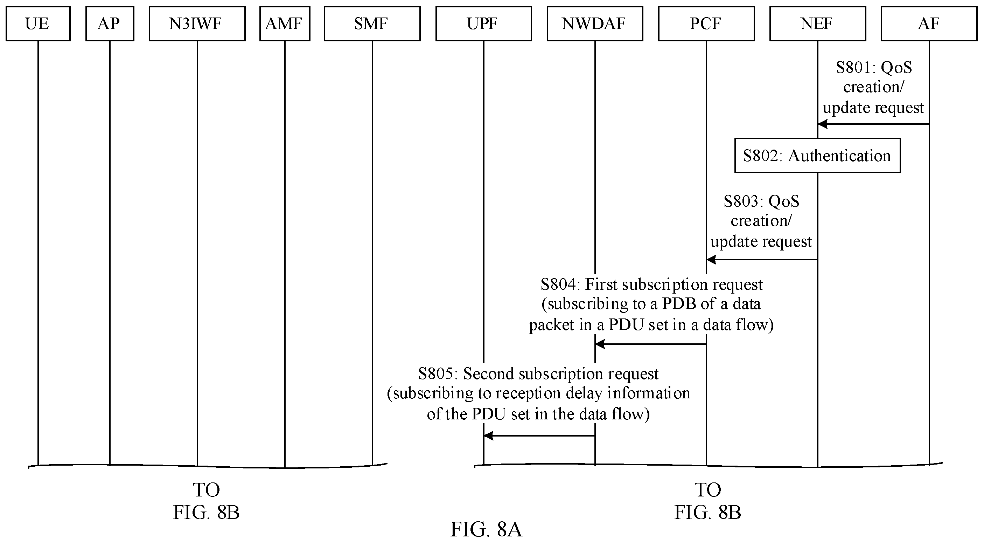

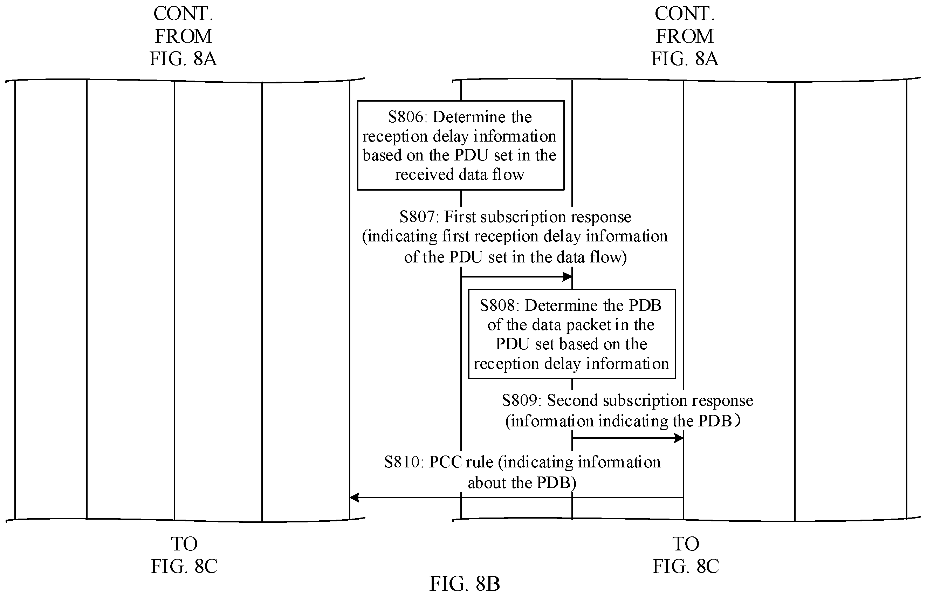

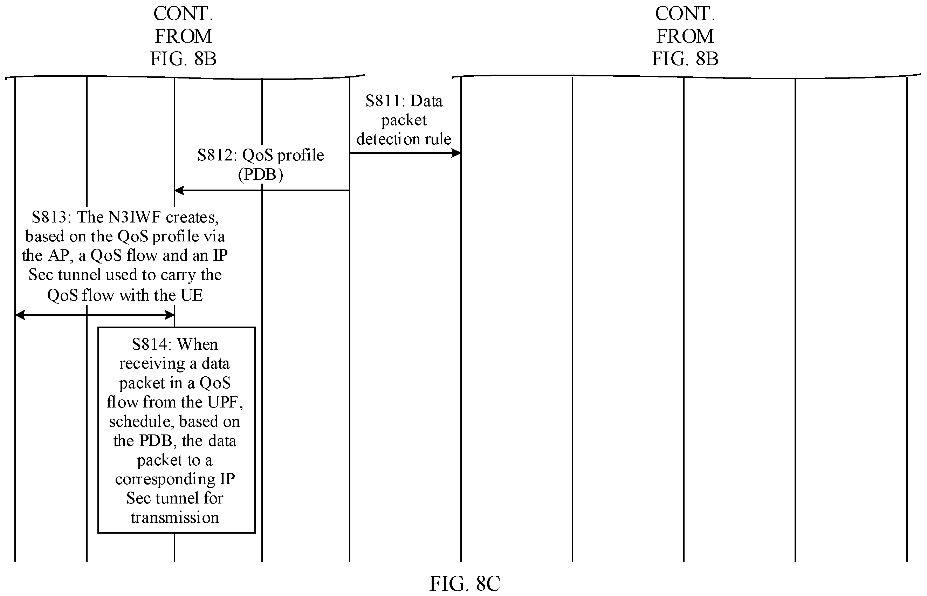

Based on the foregoing description, by using an example in which the first network element is an NWDAF, the second network element is a UPF, the first device is an N3IWF, and/or the terminal device is UE, the following describes in detail an execution procedure of the communication method shown in FIG. 5 with reference to the non-3GPP access communication system shown in FIG. 2. For example, refer to FIG. 8A to FIG. 8C. The procedure may include the following steps.

S801: An AF sends a QoS creation/update request to an NEF.

S802: The NEF authenticates the QoS creation/update request.

S803: The NEF sends the authenticated QoS creation/update request to a PCF.

For execution of steps S801 to S803, refer to the foregoing steps S601 to S603. Details are not described herein again.

S804: The PCF sends a first subscription request to the NWDAF, where the first subscription request is used to subscribe to a PDB of a data packet in a PDU set in a data flow.

In a possible implementation in some embodiments of this application, the PCF may initiate a request for analyzing information to the NWDAF based on an access type of the UE (namely, non-3GPP access). Specifically, the PCF may send a subscription request to the NWDAF, to request to obtain the PDB of the data packet in the PDU set in the data flow.

For example, the first subscription request sent by the PCF to the NWDAF may include any one or more of the analytics identifier, the data flow identifier, the data granularity level, or the arrangement order of information in the foregoing embodiment. Data that needs to be obtained as indicated by the analytics identifier may include the PDB of the data packet in the PDU set, and the analytics identifier may be "the PDB of the data packet in the PDU set".

S805: The NWDAF sends a second subscription request to the UPF, where the second subscription request is used to subscribe to reception delay information of the PDU set in the data flow.

S806: The UPF determines the reception delay information based on the PDU set in the received data flow.

S807: The UPF sends a first subscription response to the NWDAF, where the first subscription response indicates first reception delay information of the PDU set in the data flow.

For execution of steps S805 to S807, refer to the foregoing steps S605 to S607. Details are not described herein again.

S808: The MWDAF determines the PDB of the data packet in the PDU set based on the reception delay information.

The NWDAF may obtain a PSDB from operation, administration, and maintenance (operation-administration-maintenance, OAM) or another network element in a core network (for example, a PCF/SMF), and determine the PDB of the data packet in the PDU set based on the PSDB and the reception delay information from the UPF.

S809: The NWDAF sends a second subscription response to the PCF, where the second subscription response is used to send information indicating the PDB.

S810: The PCF sends a PCC rule to the SMF, where the PCC rule may indicate information about the PDB.

S811: The SMF sends a data packet detection rule to the UPF.

S812: The SMF sends a QoS profile to the N3IWF, where the QoS profile includes the PDB.

S813: The N3IWF creates, based on the QoS profile via an AP, a QoS flow and an IP Sec tunnel used to carry the QoS flow with the UE.

S814: When receiving a data packet in a QoS flow from the UPF, the N3IWF schedules, based on the PDB, the data packet to a corresponding IP Sec tunnel for transmission.

For execution of steps S810 to S814, refer to the foregoing steps S610 to S614. Details are not described herein again.

In the foregoing method, the NWDAF may subscribe to the reception delay information of the PDU set, and may more accurately determine the PDB of the data packet in the PDU set based on the reception delay information of the PDU set subscribed to, and transmit the PDB to the N3IWF via the PCF and the SMF, so that the N3IWF can perform scheduling processing at data packet granularity on the data packet based on the PDB, ensuring a processing granularity same as that of the AP in a subsequent operation, and improving communication quality.

Based on the foregoing descriptions, an embodiment of this application further provides another communication method. A difference between the communication method and the communication method in the foregoing embodiment lies in that: The UPF may directly transfer determined reception moment information and/or reception delay information to the first device, so that the reception moment information and/or the reception delay information does not need to be obtained from the UPF via another intermediate network element such as the first network element and/or the second network element in the foregoing embodiments and transferred to the first device. In addition, the reception moment information and/or the reception delay information may be carried in a data packet and transferred to the first device, and does not need to be obtained through subscription. Based on this manner, when receiving the data packet, the first device may directly perform scheduling processing on the received data packet based on the reception moment information and/or the reception delay information in the data packet.

The first device may be an NF, and the NF may be, for example, any one or more of an N3IWF, a TNGF, a TWIF, a W-AGF, a RAN, an NG-RAN, and the like.

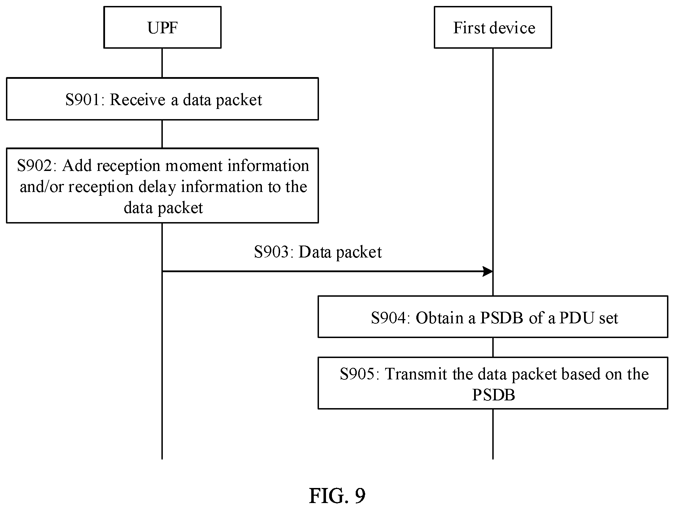

As shown in FIG. 9, the communication method may include the following steps.

S901: A UPF receives a data packet.

The UPF may receive a data packet in a PDU set in a data flow from an XR server.

S902: The UPF adds reception moment information and/or reception delay information to the data packet.

The reception moment information indicates a moment at which the UPF receives the data packet, and the reception delay information indicates a reception delay of the PDU set to which the data packet belongs at the UPF.

In some embodiments of this application, the UPF may add the reception moment information and/or the reception delay information to a GTP protocol field of the data packet.

The UPF may refer to the processing manners described in Processing 1 to Processing 6 in the foregoing embodiment, to perform processing of adding the reception moment information and/or the reception delay information to the data packet in the PDU set in the data flow.

S903: The UPF sends the data packet to a first device.

S904: The first device obtains a PSDB of the PDU set.

The PDU set includes the data packet.

In some embodiments of this application, the first device may obtain the PDSB from at least one of an SMF, a PCF, and an AF. For details, refer to the method for transferring the PSDB to the N3IWF in the foregoing embodiment. Details are not described herein again.

S905: The first device transmits the data packet based on the PSDB.

In a possible manner, the first device transmits the data packet based on the PSDB and the reception moment information and/or the reception delay information carried in the data packet from the UPF.

For example, the first device may determine a remaining delay budget of the data packet, and the remaining delay budget indicates an upper bound of a transmission delay of a data packet between the first device and a terminal device.

In some embodiments of this application, when the data packet carries the reception moment information, the first device may determine a time difference between a moment at which the first device receives the data packet and the reception moment information, and use a difference between the PSDB and the time difference as the remaining delay budget. When the data packet carries the reception delay information, the first device may use a difference between the PSDB and the reception delay information as the remaining delay budget. When the data packet includes the reception moment information and the reception delay information, the first device may use a difference between the PSDB and the reception delay information as a PDB of the data packet, determine a time difference between a moment at which the first device receives the data packet and the reception moment information, and then use a difference between the PDB and the time difference as the remaining delay budget.

For example, after determining the remaining delay budget of the data packet, the first device may perform scheduling processing on the data packet based on the remaining delay budget.

For a specific implementation of this step, refer to the related method described in step S506. Details are not described herein again.

In some embodiments of this application, in the foregoing method, after receiving the data packet of the PDU set, the UPF may construct a null packet and add the reception moment information and/or the reception delay information to the null packet, and the first device may determine the reception moment information and/or the reception delay information based on the null packet. In addition, for other processing performed by the UPF and the first device, refer to the description in the foregoing method. Details are not described herein again.

In the foregoing method, the UPF may include, in the data packet, the reception moment information of the data packet and/or the reception delay information of the PDU set of the data packet, and indicate the information to the first device such as an N3IWF, so that the first device may determine the remaining delay budget of the data packet based on the information, and perform scheduling processing at data packet granularity on the data packet based on the remaining delay budget, ensuring a processing granularity same as that of the AP, and improving communication quality.

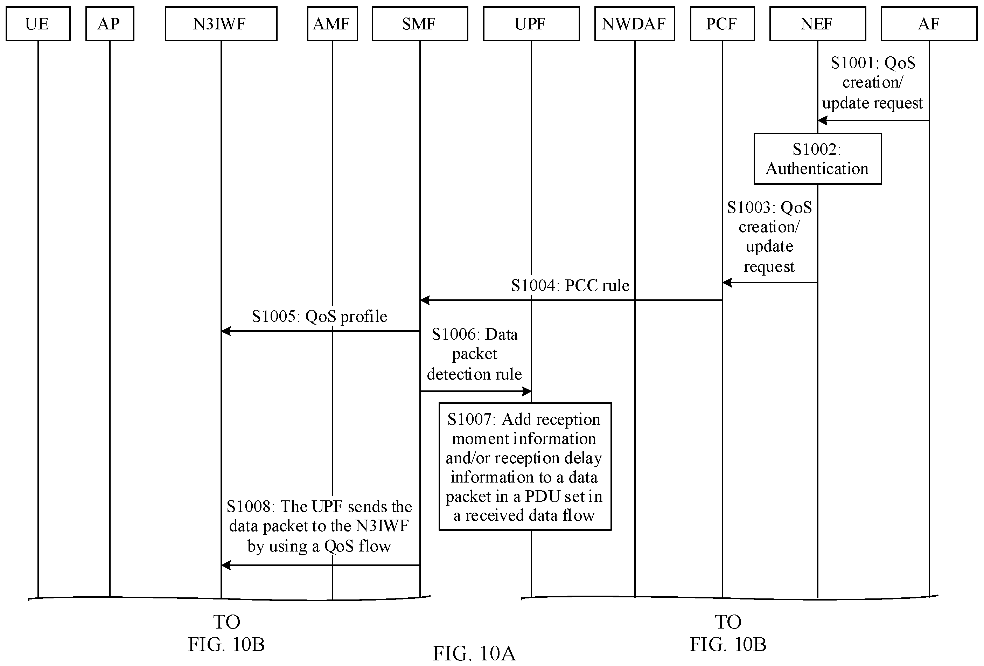

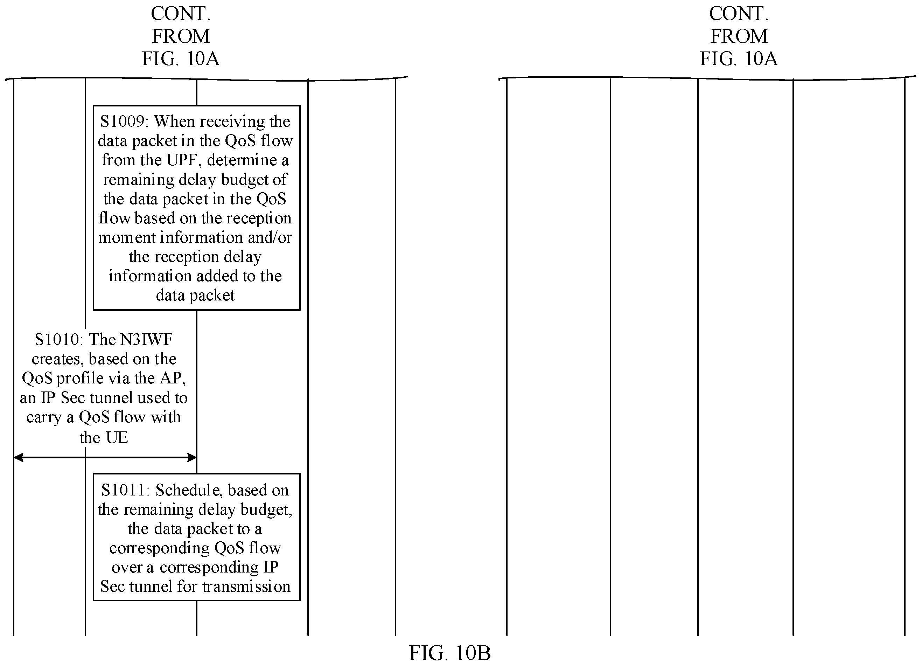

Based on the foregoing description, by using an example in which the first device is an N3IWF and the terminal device is UE, the following describes in detail an execution procedure of the communication method shown in FIG. 9 with reference to the non-3GPP access communication system shown in FIG. 2. For example, refer to FIG. 10A and FIG. 10B are. The procedure may include the following steps.

S1001: An AF sends a QoS creation/update request to an NEF.

S1002: The NEF authenticates the QoS creation/update request.

S1003: The NEF sends the authenticated QoS creation/update request to a PCF.

For execution of steps S1001 to S1003, refer to the foregoing steps S601 to S603. Details are not described herein again.

S1004: The PCF sends a PCC rule to an SMF.

S1005: The SMF sends a QoS profile to the N3IWF.

S1006: The SMF sends a data packet detection rule to a UPF.

For execution of the foregoing steps S1004 to S1006, refer to the related processing method in the 3GPP access communication system described in the foregoing embodiment. Details are not described herein again.

S1007: The UPF adds reception moment information and/or reception delay information to a data packet in a PDU set in a received data flow.

For execution of this step, refer to the method described in step S902. Details are not described herein again.

S1008: The UPF sends the data packet to the N3IWF by using a QoS flow.

S1009: When receiving the data packet in the QoS flow from the UPF, the N3IWF determines a remaining delay budget of the data packet in the QoS flow based on the reception moment information and/or the reception delay information added to the data packet.

For execution of this step, refer to the method described in the foregoing steps S903 and S904. Details are not described herein again.

S1010: The N3IWF creates, based on the QoS profile via an AP, an IP Sec tunnel used to carry a QoS flow with the UE.

S1011: The N3IWF schedules, based on the remaining delay budget, the data packet to a corresponding QoS flow over a corresponding IP Sec tunnel for transmission.

For execution of the foregoing steps S1010 and S1011, refer to the foregoing steps S713 and S714. Details are not described herein again.

Based on the foregoing descriptions, an embodiment of this application further provides a communication method. A difference between the communication method and the communication method in the foregoing embodiment lies in that: The UPF may encapsulate, in an IP protocol layer field of the data packet, PSI used to identify data packets belonging to a same PDU set, and send the data packet to the first device. In this way, the first device can identify the PSI in the data packet, identify, based on the PSI, data packets belonging to a same PDU set, and perform scheduling processing at PDU set granularity on the data packets belonging to the same PDU set.

The first device may be an NF, and the NF may be, for example, an N3IWF, a TNGF, a TWIF, or a W-AGF.

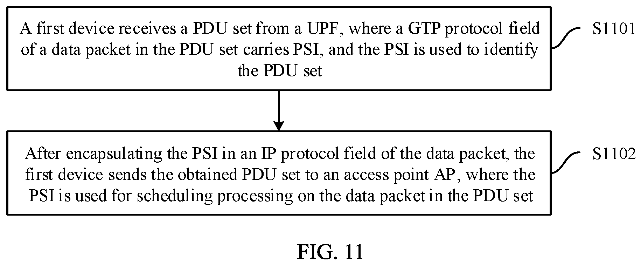

As shown in FIG. 11, the communication method may include the following steps.

S1101: A first device receives a PDU set from a UPF, where a GTP protocol field of a data packet in the PDU set carries PSI, and the PSI is used to identify the PDU set.

The GTP protocol field may be a GTP-U header.

S1102: After encapsulating the PSI in an IP protocol field of the data packet, the first device sends the obtained PDU set to an access point AP, where the PSI is used for scheduling processing on the data packet in the PDU set.

Specifically, the PSI may be used by the access point AP to perform scheduling processing on the data packet in the PDU set.

In some embodiments of this application, the IP protocol field of the data packet further includes a DSCP of an IPsec over which a QoS flow used to transmit the data packet is located, the DSCP corresponds to a PSDB of the PDU set, and the QoS flow is created by the first device based on the PSDB. The first device may send the data packet in the PDU set to the AP by using the QoS flow.

After receiving the data packet, the AP may identify, based on the PSI carried in the data packet, the PDU set to which the data packet belongs, and may determine a corresponding IP Sec tunnel based on the DSCP carried in the data packet, to transmit the data packet in the identified PDU set to the terminal device over the determined IP Sec tunnel.

In the foregoing method, the first device encapsulates the PSI in the IP protocol field of the data packet, so that the AP can identify data packets belonging to a same PDU set, and may perform scheduling processing at PDU set granularity on the data packet. Therefore, the method can ensure that the first device and the AP perform processing at a same granularity, improving communication quality.

In some embodiments of this application, processing of encapsulating the PSI in the IP protocol field of the data packet may also be completed by the UPF. To be specific, the UPF may include the PSI information in the IP protocol field of the data packet in the PDU set sent to the first device. When receiving the data packet in the PDU set, the first device may send the data packet to the AP in the foregoing scheduling processing manner.

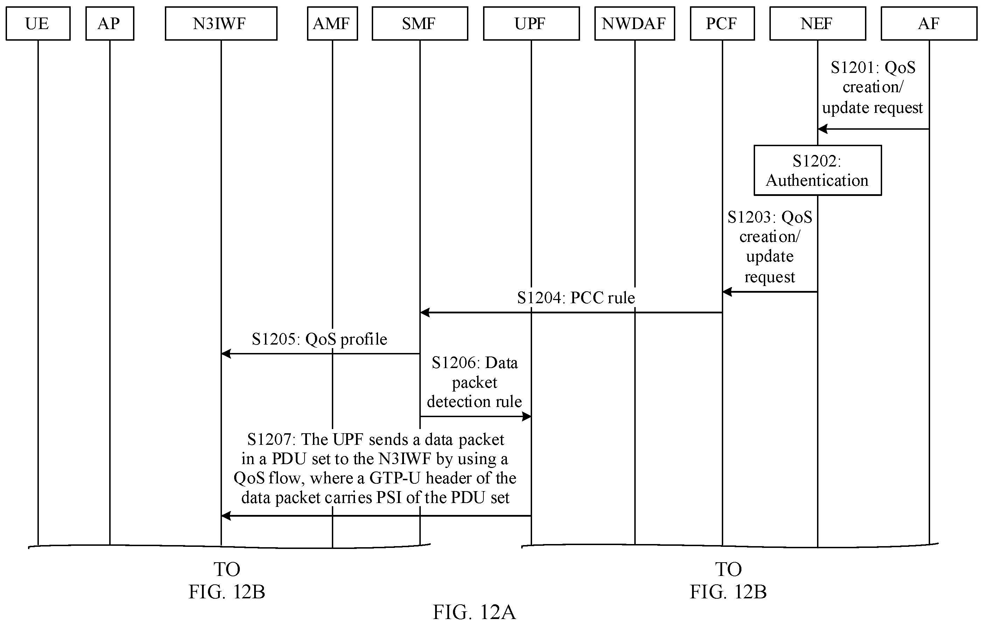

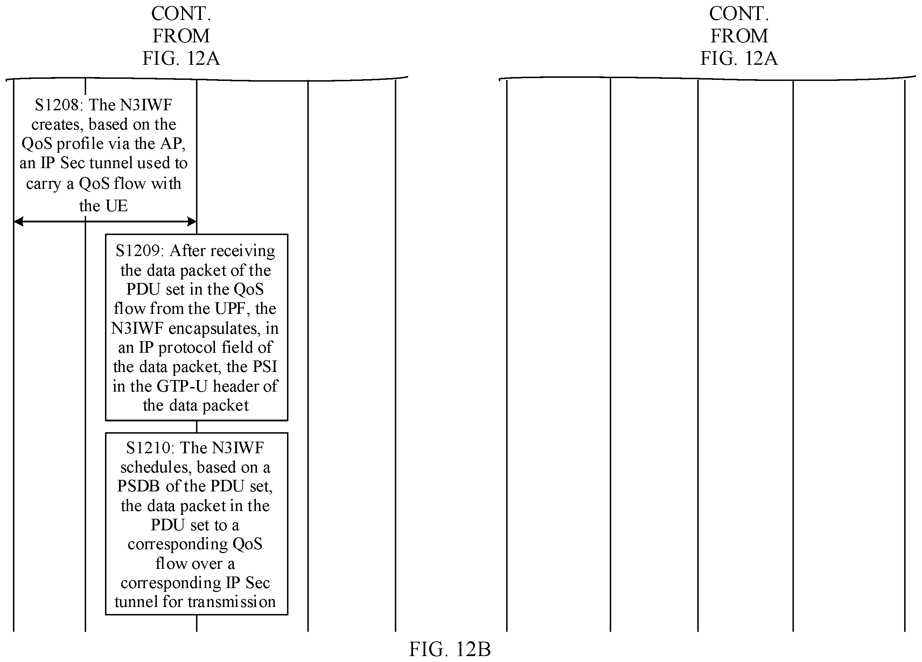

Based on the foregoing description, by using an example in which the first device is an N3IWF and the terminal device is UE, the following describes in detail an execution procedure of the communication method shown in FIG. 11 with reference to the non-3GPP access communication system shown in FIG. 2. For example, refer to FIG. 12A and FIG. 12B. The procedure may include the following steps.

S1201: An AF sends a QoS creation/update request to an NEF.

S1202: The NEF authenticates the QoS creation/update request.

S1203: The NEF sends the authenticated QoS creation/update request to a PCF.

For execution of the foregoing steps S1201 to S1203, refer to the foregoing steps S601 to S603. Details are not described herein again.

S1204: A PCF sends a PCC rule to an SMF.

S1205: The SMF sends a QoS profile to the N3IWF.

S1206: The SMF sends a data packet detection rule to a UPF.

For execution of the foregoing steps S1204 to S1206, refer to the related processing method in the 3GPP access communication system described in the foregoing embodiment. Details are not described herein again.

S1207: The UPF sends a data packet in a PDU set to the N3IWF by using a QoS flow, where a GTP-U header of the data packet carries PSI of the PDU set.

S1208: The N3IWF creates, based on the QoS profile via an AP, an IP Sec tunnel used to carry a QoS flow with the UE.

Specifically, the N3IWF may create the IP Sec based on a PSDB of the PDU set, and associate a DSCP value of the IP Sec with the PSDB of the PDU set, to establish a mapping between the PSDB and the DSCP.

S1209: After receiving the data packet of the PDU set in the QoS flow from the UPF, the N3IWF encapsulates, in an IP protocol field of the data packet, the PSI in the GTP-U header of the data packet.

S1210: The N3IWF schedules, based on the PSDB of the PDU set, the data packet in the PDU set to a corresponding QoS flow over a corresponding IP Sec tunnel for transmission.

In some embodiments of this application, the foregoing steps S1207 to S1210 may be replaced with the following steps: The UPF sends a data packet in a PDU set to the N3IWF by using a QoS flow, where an IP protocol field of the data packet carries PSI of the PDU set; the N3IWF creates, based on the QoS profile via an AP, an IP Sec tunnel used to carry a QoS flow with the UE; and after receiving the data packet in the PDU set in the QoS flow from the UPF, the N3IWF schedules, based on the PSDB of the PDU set, the data packet in the PDU set to a corresponding QoS flow over a corresponding IP Sec tunnel for transmission.

In some embodiments of this application, based on the method provided in the foregoing embodiment, the first device such as an N3IWF may further establish, based on PDU set importance information in the PSI of the PDU set (indicating an importance degree of the PDU set), a mapping relationship between the DSCP of the IP Sec and the PDU set importance information. Based on the method, the IP protocol field of the data packet in the PDU set sent by the first device to the access point AP may include the DSCP of the IPsec over which the QoS flow used to transmit the data packet is located. The DSCP may correspond to the PDU set importance information of the PDU set, and the QoS flow is created based on the PDU set importance information.

It should be understood that the implementation procedures provided in the foregoing embodiments are merely examples of the method procedures applicable to embodiments of this application. An execution sequence of the steps in the embodiments may be correspondingly adjusted based on an actual requirement, and another step may be added, or some steps may be removed. For execution of some steps, refer to definitions in a related standard. Same or similar solutions between different embodiments may be mutually referenced.

The foregoing describes the solutions provided in embodiments of this application. It may be understood that, to implement the foregoing functions, the network element or device may include a corresponding hardware structure and/or software module for performing the functions. A person skilled in the art should be easily aware that, in combination with units and algorithm steps of the examples described in embodiments disclosed in this specification, embodiments of this application may be implemented by hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, the network element or device may be divided into functional units based on the foregoing method examples. For example, each functional unit may be obtained through division based on each corresponding function, or two or more functions may be integrated into one unit. The integrated unit may be implemented in a form of hardware, or may be implemented in a form of a software functional unit.

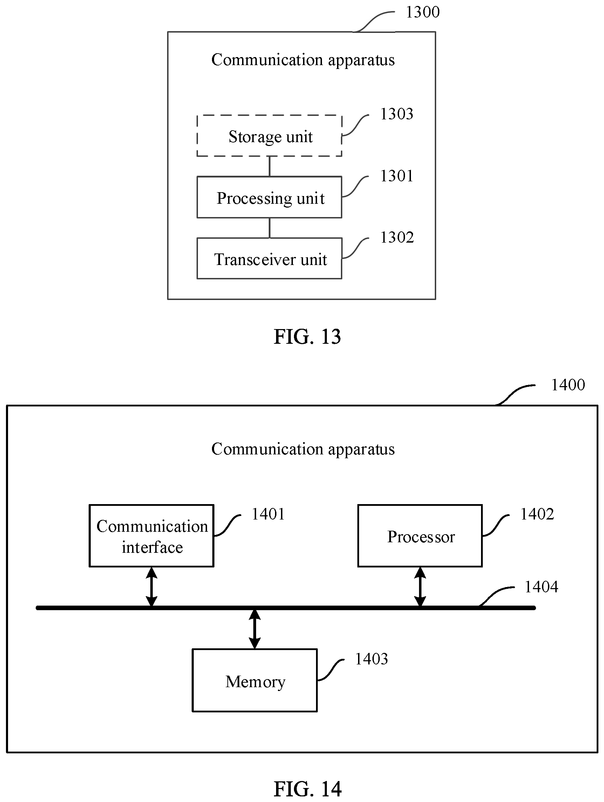

Based on the foregoing embodiments and a same technical concept, an embodiment of this application further provides a communication apparatus, configured to implement a function of the network element or device provided in embodiments of this application. As shown in FIG. 13, the communication apparatus 1300 may include a processing unit 1301 and a transceiver unit 1302. The communication apparatus 1300 may be the network element or device in any one of the foregoing embodiments, or the communication apparatus 1300 may be an apparatus used in the network element or device in any one of the foregoing embodiments.

In an implementation, the communication apparatus 1300 may further include a storage unit 1303, configured to store program code and data of the communication apparatus 1300. The storage unit 1303 may be a memory.

The processing unit 1301 is configured to control and manage actions of the communication apparatus 1300. The processing unit 1301 may be a processor or a controller, such as a general-purpose central processing unit (central processing unit, CPU), a general-purpose processor, a digital signal processor (digital signal processor, DSP), an application specific integrated circuit (application specific integrated circuit, ASIC), a field programmable gate array (field programmable gate array, FPGA) or another programmable logic device, a transistor logic device, a hardware component, or any combination thereof. The processor may implement or execute various example logical blocks, modules, and circuits described with reference to content disclosed in this application. Alternatively, the processor may be a combination of processors implementing a computing function, for example, a microprocessor or a combination of multiple microprocessors, or a combination of a DSP and a microprocessor.

The transceiver unit 1302 may be an interface circuit of the communication apparatus 1300, and is configured to receive a signal from another apparatus. For example, when the communication apparatus 1300 is implemented as a chip, the transceiver unit 1302 may be an interface circuit of the chip configured to send a signal to another chip or apparatus and receive a signal from another chip or apparatus.

The communication apparatus 1300 may be configured to implement functions of the network element or device provided in embodiments of this application.

In an example, when the communication apparatus 1300 is configured to implement a function of the first network element provided in embodiments of this application, the processing unit 1301 may be configured to: obtain reception delay information of a protocol data unit PDU set, and obtain a PDU set delay budget of the PDU set, where the reception delay information indicates a reception delay of the PDU set at a user plane function network element; and determine a packet delay budget of a data packet in the PDU set based on the reception delay information and the PDU set delay budget, where the packet delay budget indicates an upper bound of a transmission delay of the data packet between the user plane function network element and a terminal device. The transceiver unit 1302 may be configured to send the packet delay budget to a first device.

In an example, when the communication apparatus 1300 is configured to implement a function of the second network element provided in embodiments of this application, the processing unit 1301 may be configured to determine reception delay information of a PDU set, where the reception delay information indicates a reception delay of the PDU set at a user plane function network element. The transceiver unit 1302 may be configured to send the reception delay information to a first network element, where the reception delay information is used to determine a packet delay budget of a data packet in the PDU set, and the packet delay budget indicates an upper bound of a transmission delay of the data packet between the user plane function network element and a terminal device.

In an example, when the communication apparatus 1300 is configured to implement a function of the first device provided in embodiments of this application, the transceiver unit 1302 may be configured to: receive a packet delay budget from a first network element, where the packet delay budget indicates an upper bound of a transmission delay of a data packet between a user plane function network element and a terminal device; and receive the data packet from the user plane function network element, where the data packet carries reception moment information, and the reception moment information indicates a moment at which the user plane function network element receives the data packet. The processing unit 1301 may be configured to perform scheduling processing on the data packet based on the packet delay budget and the reception moment information.

In an example, when the communication apparatus 1300 is configured to implement a function of the UPF network element provided in embodiments of this application, the transceiver unit 1302 may be configured to receive a data packet. The processing unit 1301 may be configured to: control the transceiver unit 1302 to send the data packet to a first device after adding reception moment information and/or reception delay information to the data packet, where the reception moment information indicates a moment at which the user plane function network element receives the data packet, the reception delay information indicates a reception delay of a PDU set to which the data packet belongs at the user plane function network element, and the reception delay information is used to determine a remaining delay budget of the data packet.

In an example, when the communication apparatus 1300 is configured to implement a function of the second network element provided in embodiments of this application, the processing unit 1301 may be configured to obtain a PDU set delay budget of a PDU set, where the PDU set includes a data packet. The transceiver unit 1302 may be configured to receive the data packet from a user plane function network element, where the data packet includes reception moment information and/or reception delay information, the reception moment information indicates a moment at which the user plane function network element receives the data packet, and the reception delay information indicates a reception delay of the PDU set at the user plane function network element. The processing unit 1301 may be further configured to: determine a remaining delay budget of the data packet based on the PDU set delay budget and the reception moment information and/or the reception delay information; and perform scheduling processing on the data packet based on the remaining delay budget.

In an example, when the communication apparatus 1300 is configured to implement a function of the second network element provided in embodiments of this application, the transceiver unit 1302 may be configured to receive a PDU set from a user plane function network element, where a GTP protocol field of a data packet in the PDU set carries PDU set information, and the PDU set information is used to identify the PDU set. The processing unit 1301 may be configured to: after encapsulating the PDU set information in an IP protocol field of the data packet, control the transceiver unit to send the obtained PDU set to an access point AP, where the PDU set information is used for scheduling processing on the data packet in the PDU set.

In an example, the transceiver unit 1302 may include a sending unit and a receiving unit. The sending unit may be configured to perform a sending operation in the foregoing method embodiment, and the receiving unit may be configured to perform a receiving operation in the foregoing method embodiment.

The foregoing gives examples of methods in which the communication apparatus 1300 performs some operations of the network element or device. It may be understood that the processing unit 1301 may be further configured to perform steps or operations related to processing that are performed by the network element or device in the foregoing method embodiments other than receiving and sending, and the transceiver unit 1302 may be further configured to perform steps or operations related to sending and/or receiving that are performed by the network element or device in the foregoing method embodiments. For details, refer to related descriptions in the foregoing method embodiments. Details are not described herein again.

It should be understood that division into functional units in embodiments of this application is an example, and is merely logical function division. In actual implementation, there may be another division manner. For example, the transceiver unit 1302 may be split into a sending unit, a receiving unit, and the like. In addition, functional modules in embodiments of this application may be integrated into one processor, or may exist alone physically, or two or more modules may be integrated into one module. The integrated module may be implemented in a form of hardware, or may be implemented in a form of a software functional module.

Based on the foregoing embodiments and a same technical concept, this application further provides a communication apparatus. As shown in FIG. 14, the communication apparatus may be an implementation of the communication apparatus shown in FIG. 13 as a hardware circuit. The communication apparatus may be configured to perform a function of the network element or device in the foregoing method embodiments. For ease of description, FIG. 14 shows only main parts of the communication apparatus.

As shown in FIG. 14, the communication apparatus 1400 may include at least one processor 1402. Optionally, the communication apparatus 1400 may further include a communication interface 1401 and a memory 1403. The processor may also be referred to as a processing unit, a processing board, a processing module, a processing apparatus, or the like. The processor 1402 may be configured to execute instructions or a program stored in the memory 1403. When the instructions or the program stored in the memory 1403 is executed, the processor 1402 may be configured to perform an operation performed by the processing unit 1301 in the foregoing embodiment, and the communication interface 1401 may be configured to perform an operation performed by the transceiver unit 1302 in the foregoing embodiment.

The memory 1403 may be configured to store program instructions and/or data. The memory 1403 and the processor 1402 may be disposed in a coupled manner, or may be disposed separately. The coupling in embodiments of this application is indirect coupling or a communication connection between apparatuses, units, or modules for information exchange between the apparatuses, the units, or the modules, and may be in electrical, mechanical, or other forms. The processor 1402 may operate in collaboration with the memory 1403. The processor 1402 may execute the program instructions stored in the memory 1403. At least one of the at least one memory may be included in the processor.

In an implementation process, steps in the foregoing methods can be implemented by using a hardware integrated logic circuit in the processor, or by using instructions in a form of software. The steps of the methods disclosed with reference to embodiments of this application may be performed by a hardware processor, or may be performed through a combination of hardware in the processor and a software module. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor. To avoid repetition, details are not described herein again.

Optionally, the processor in embodiments of this application may be an integrated circuit chip, and has a signal processing capability. In an implementation process, steps in the foregoing method embodiments can be implemented by using a hardware integrated logic circuit in the processor, or by using instructions in a form of software. The processor may be a general-purpose processor, a digital signal processing circuit (digital signal processor, DSP), an application specific integrated circuit (application specific integrated circuit, ASIC), a field programmable gate array (field programmable gate array, FPGA) or another programmable logic device, a discrete gate or a transistor logic device, or a discrete hardware component.

It may be understood that the memory in embodiments of this application may be a volatile memory or a non-volatile memory, or may include a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. It should be noted that the memory of the systems and methods described in this specification includes but is not limited to these and any memory of another proper type.

The communication interface 1401 is configured to communicate with another device by using a transmission medium, so that an apparatus in the communication apparatus 1400 can communicate with the another device. In this embodiment of this application, the communication interface may be a transceiver, a circuit, a bus, a module, or a communication interface of another type. In this embodiment of this application, when the communication interface is a transceiver, the transceiver may include an independent receiver and an independent transmitter; or may be a transceiver integrating a transceiver function, or an interface circuit. The transceiver may also be referred to as a transceiver unit, a transceiver machine, a transceiver apparatus, or the like. The receiver sometimes may also be referred to as a receiving machine, a receiving module, a receiving circuit, or the like. The transmitter sometimes may also be referred to as a transmitter machine, a transmitting machine, a transmitting module, a transmitting circuit, or the like. The processor may control the transceiver to receive or send a signal. When the transceiver includes the receiver and the transmitter, the processor may control the receiver to perform a receiving operation in the foregoing method embodiment, and the processor may control the transmitter to perform a sending operation in the foregoing method embodiment.

Optionally, the communication apparatus 1400 may further include a communication line 1404. The communication interface 1401, the processor 1402, and the memory 1403 may be connected to each other by using the communication line 1404. The communication line 1404 may be a peripheral component interconnect (peripheral component interconnect, PCI for short) bus, an extended industry standard architecture (extended industry standard architecture, EISA for short) bus, or the like. The communication line 1404 may be classified into an address bus, a data bus, a control bus, and the like. For ease of representation, only one bold line is used in FIG. 14 for representation, but this does not mean that there is only one bus or only one type of bus.

The communication apparatus 1400 may be a device or apparatus having a chip, or a device or apparatus having an integrated circuit, or a chip or chip system in the terminal device or the communication apparatus shown above. This is not specifically limited in this application, provided that the communication apparatus 1400 can be configured to perform the operations performed by the terminal device in the foregoing method embodiments.

Based on the foregoing embodiments and a same technical concept, an embodiment of this application further provides a computer-readable storage medium. The computer-readable storage medium stores a computer program or instructions. When the computer program or the instructions are run on a communication apparatus, the communication apparatus performs the method applied to the network element or device as provided in the foregoing embodiments.

Based on the foregoing embodiments and a same technical concept, an embodiment of this application further provides a computer program product. The computer program product includes a computer program or instructions. When the computer program or the instructions are executed by a communication apparatus, the method applied to the network element or device as provided in the foregoing embodiments is implemented.

Based on the foregoing embodiments and a same technical concept, an embodiment of this application further provides a chip system. The chip system includes a processor. The processor is configured to read and execute a software program stored in a memory, to implement the method applied to the network element or device as provided in the foregoing embodiments.

Optionally, the processor may be a processing module, a microprocessor, or an integrated circuit integrated in the chip system.

Optionally, the chip system may further include the memory, and the memory may be coupled to the processor through an interface.

Optionally, the chip system may further include a transceiver, and the transceiver may be an input/output circuit or a communication interface. Optionally, the transceiver may include a receiver and a transmitter.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

The computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of the claims of this application and their equivalent technologies.

## Claims

1. A communication method, applied to a first network element, wherein the method comprises:
obtaining reception delay information of a protocol data unit PDU set, and obtaining a PDU set delay budget of the PDU set, wherein the reception delay information indicates a reception delay of the PDU set at a user plane function network element;
determining a packet delay budget of a data packet in the PDU set based on the reception delay information and the PDU set delay budget, wherein the packet delay budget indicates a transmission delay of the data packet between the user plane function network element and a terminal device; and
sending the packet delay budget to a first device.

2. The method according to claim 1, wherein the reception delay information comprises at least one of the following:
a first time difference;
a delay corresponding to a value interval comprising the first time difference in multiple specified value intervals, wherein different value intervals correspond to different delays;
a maximum time difference in multiple first time differences;
a minimum time difference in multiple first time differences; and/or
an average time difference of multiple first time differences, wherein
the first time difference is a time difference between arrivals, at the user plane function network element, of a 1^{st} data packet and a last data packet in a PDU set received by the user plane function network element.

3. The method according to claim 2, wherein the PDU set is received by the user plane function network element in a first time period.

4. The method according to any one of claims 1 to 3, wherein the reception delay information is further used as reception delay information of each PDU set in a data flow to which the PDU set belongs.

5. The method according to any one of claims 1 to 4, wherein the obtaining the reception delay information of the PDU set comprises:
sending a first message to a second network element, wherein the first message is used to subscribe to the reception delay information; and
receiving first information from the second network element, wherein the first information indicates the reception delay information.

6. The method according to claim 5, wherein the first message comprises at least one of the following:
an analytics identifier, used to identify data that needs to be obtained, wherein the data that needs to be obtained comprises the reception delay information;
information indicating a terminal device associated with the reception delay information;
information indicating the data flow to which the PDU set belongs;
information indicating a data granularity of the reception delay information;
information indicating an arrangement order of feedback information of the second network element;
a quantity of PDU sets used to determine the reception delay information; and/or
information indicating a first time period, wherein one or more PDU sets that arrive at the user plane function network element in the first time period are used to determine the reception delay information.

7. The method according to any one of claims 1 to 6, wherein the determining the packet delay budget of the data packet in the PDU set based on the reception delay information and the PDU set delay budget comprises:
using a difference between the PDU set delay budget and the reception delay information as the packet delay budget.

8. A communication method, applied to a second network element, wherein the method comprises:
determining reception delay information of a PDU set, wherein the reception delay information indicates a reception delay of the PDU set at a user plane function network element; and
sending the reception delay information to a first network element, wherein the reception delay information is used to determine a packet delay budget of a data packet in the PDU set, and the packet delay budget indicates a transmission delay of the data packet between the user plane function network element and a terminal device.

9. The method according to claim 8, wherein the reception delay information comprises at least one of the following:
a first time difference;
a delay corresponding to a value interval comprising the first time difference in multiple specified value intervals, wherein different value intervals correspond to different delays;
a maximum time difference in multiple first time differences;
a minimum time difference in multiple first time differences; and/or
an average time difference of multiple first time differences, wherein
the first time difference is a time difference between arrivals, at the user plane function network element, of a 1^{st} data packet and a last data packet in a PDU set received by the user plane function network element.

10. The method according to claim 9, wherein the PDU set is received by the user plane function network element in a first time period.

11. The method according to any one of claims 8 to 10, wherein the reception delay information is further used as reception delay information of each PDU set in a data flow to which the PDU set belongs.

12. The method according to any one of claims 8 to 11, wherein before determining the reception delay information of the PDU set, or before sending the reception delay information to the first network element, the method further comprises:
receiving a first message from the first network element, wherein the first message is used to subscribe to the reception delay information; and
the sending the reception delay information to the first network element comprises:
sending first information to the first network element, wherein the first information indicates the reception delay information.

13. The method according to claim 12, wherein the first message comprises at least one of the following:
an analytics identifier, used to identify data that needs to be obtained, wherein the data that needs to be obtained comprises the reception delay information;
information indicating a terminal device associated with the reception delay information;
information indicating the data flow to which the PDU set belongs;
information indicating a data granularity of the reception delay information;
information indicating an arrangement order of feedback information of the second network element;
a quantity of PDU sets used to determine the reception delay information; and/or
information indicating a first time period, wherein one or more PDU sets that arrive at the user plane function network element in the first time period are used to determine the reception delay information.

14. The method according to any one of claims 8 to 10, wherein the determining the reception delay information of the PDU set comprises:
determining reception moment information, wherein the reception moment information comprises moments at which a 1^{st} data packet and a last data packet in each of at least one PDU set received by the user plane function network element arrive at the user plane function network element; and
determining the reception delay information based on the reception moment information.

15. The method according to any one of claims 8 to 10 and claim 14, wherein the method further comprises:
sending the PDU set, wherein a data packet in the PDU set carries reception moment information, and the reception moment information indicates a moment at which the user plane function network element receives the data packet.

16. A communication method, applied to a first device, wherein the method comprises:
receiving a packet delay budget from a first network element, wherein the packet delay budget indicates a transmission delay of a data packet between a user plane function network element and a terminal device;
receiving the data packet from the user plane function network element, wherein the data packet carries reception moment information, and the reception moment information indicates a moment at which the user plane function network element receives the data packet; and
performing scheduling processing on the data packet based on the packet delay budget and the reception moment information.

17. The method according to claim 16, wherein the performing scheduling processing on the data packet based on the packet delay budget and the reception moment information comprises:
determining a remaining delay budget based on the packet delay budget and the reception moment information, wherein the remaining delay budget indicates a transmission delay of the data packet between the first device and the terminal device; and
performing scheduling processing on the data packet based on the remaining delay budget.

18. A communication method, applied to a user plane function network element, wherein the method comprises:
receiving a data packet in a PDU set; and
sending the data packet to a first device after adding reception moment information and/or reception delay information to the data packet, wherein
the reception moment information indicates a moment at which the UPF receives the data packet, the reception delay information indicates a reception delay of the PDU set to which the data packet belongs at the UPF, the reception moment information and/or the reception delay information is used to determine a remaining delay budget of the data packet, and the remaining delay budget of the data packet is used for scheduling processing on the data packet.

19. The method according to claim 18, wherein the adding the reception moment information and/or the reception delay information to the data packet comprises:
adding the reception moment information and/or the reception delay information to a general packet radio service tunneling protocol GTP protocol field of the data packet.

20. The method according to claim 18 or 19, wherein the reception delay information comprises at least one of the following:
a first time difference;
a delay corresponding to a value interval comprising the first time difference in multiple specified value intervals, wherein different value intervals correspond to different delays;
a maximum time difference in multiple first time differences;
a minimum time difference in multiple first time differences; and/or
an average time difference of multiple first time differences, wherein
the first time difference is a time difference between arrivals, at the user plane function network element, of a 1^{st} data packet and a last data packet in a PDU set received by the user plane function network element.

21. The method according to claim 20, wherein the PDU set is received by the user plane function network element in a first time period.

22. The method according to any one of claims 18 to 21, wherein the reception delay information is further used as reception delay information of each PDU set in a data flow to which the PDU set belongs.

23. The method according to any one of claims 18 to 22, wherein
when the reception moment information is added to the data packet, the data packet is each data packet in the PDU set, or the data packet is a 1^{st} or last data packet in the PDU set; or
when the reception delay information is added to the data packet, the data packet is a last data packet in the PDU set.

24. A communication method, applied to a first device, wherein the method comprises:
obtaining a PDU set delay budget of a PDU set, wherein the PDU set comprises a data packet;
receiving the data packet from a user plane function network element, wherein the data packet comprises reception moment information and/or reception delay information, the reception moment information indicates a moment at which the user plane function network element receives the data packet, and the reception delay information indicates a reception delay of the PDU set at the user plane function network element;
determining a remaining delay budget of the data packet based on the PDU set delay budget and the reception moment information and/or the reception delay information; and
performing scheduling processing on the data packet based on the remaining delay budget.

25. The method according to claim 24, wherein the reception moment information and/or the reception delay information is located in a GTP protocol field of the data packet.

26. The method according to claim 24 or 25, wherein the reception delay information comprises at least one of the following:
a first time difference;
a delay corresponding to a value interval comprising the first time difference in multiple specified value intervals, wherein different value intervals correspond to different delays;
a maximum time difference in multiple first time differences;
a minimum time difference in multiple first time differences; and/or
an average time difference of multiple first time differences, wherein
the first time difference is a time difference between arrivals, at the user plane function network element, of a 1^{st} data packet and a last data packet in a PDU set received by the user plane function network element.

27. The method according to claim 26, wherein the PDU set is received by the user plane function network element in a first time period.

28. The method according to any one of claims 24 to 27, wherein the reception delay information is further used as reception delay information of each PDU set in a data flow to which the PDU set belongs.

29. The method according to any one of claims 24 to 28, wherein
when the reception moment information is added to the data packet, the data packet is each data packet in the PDU set, or the data packet is a 1^{st} or last data packet in the PDU set; or
when the reception delay information is added to the data packet, the data packet is a last data packet in the PDU set.

30. The method according to any one of claims 24 to 29, wherein the determining the remaining delay budget of the data packet based on the PDU set delay budget and the reception moment information and/or the reception delay information comprises:
determining a time difference between a moment at which the first device receives the data packet and the reception moment information, and using a difference between the PDU set delay budget and the time difference as the remaining delay budget; or
using a difference between the PDU set delay budget and the reception delay information as the remaining delay budget; or
using a difference between the PDU set delay budget and the reception delay information as a packet delay budget of the data packet, determining a time difference between a moment at which the first device receives the data packet and the reception moment information, and using a difference between the packet delay budget and the time difference as the remaining delay budget, wherein the packet delay budget indicates an upper bound of a transmission delay of the data packet between the user plane function network element and a terminal device.

31. The method according to any one of claims 24 to 30, wherein the performing scheduling processing on the data packet based on the remaining delay budget comprises:
determining a target quality of service QoS flow based on the remaining delay budget, and transmitting the data packet by using the target QoS flow.

32. The method according to any one of claims 24 to 31, wherein an IP protocol field of the data packet comprises a differentiated services code point DSCP of an internet protocol security IPsec tunnel over which the QoS flow used to transmit the data packet is located, the DSCP corresponds to PDU set importance information of the PDU set, the QoS flow is created based on the PDU set importance information, and the PDU set importance information indicates an importance degree of the PDU set.

33. A communication apparatus, comprising at least one processor, wherein the at least one processor is configured to execute instructions stored in a memory, to cause the communication apparatus to perform the method according to any one of claims 1 to 7, perform the method according to any one of claims 8 to 15, perform the method according to either of claims 16 and 17, perform the method according to any one of claims 18 to 23, or perform the method according to any one of claims 24 to 32.

34. A communication apparatus, comprising: a module or unit configured to perform the method according to any one of claims 1 to 7, a module or unit configured to perform the method according to any one of claims 8 to 15, a module or unit configured to perform the method according to either of claims 16 and 17, a module or unit configured to perform the method according to any one of claims 18 to 23, or a module or unit configured to perform the method according to any one of claims 24 to 32.

35. A communication system, comprising a communication apparatus configured to perform the method according to any one of claims 1 to 7, a communication apparatus configured to perform the method according to any one of claims 8 to 15, and a communication apparatus configured to perform the method according to either of claims 16 and 17; or comprising a communication apparatus configured to perform the method according to any one of claims 18 to 23 and a communication apparatus configured to perform the method according to any one of claims 24 to 32.

36. A computer-readable storage medium, wherein the storage medium stores a computer program or instructions, and when the computer program or the instructions are run on a communication apparatus, the communication apparatus is caused to perform the method according to any one of claims 1 to 7, perform the method according to any one of claims 8 to 15, perform the method according to either of claims 16 and 17, perform the method according to any one of claims 18 to 23, or perform the method according to any one of claims 24 to 32.

37. A computer program product, wherein the computer program product comprises a computer program or instructions, and when the computer program or the instructions are executed by a communication apparatus, the method according to any one of claims 1 to 7, the method according to any one of claims 8 to 15, the method according to either of claims 16 and 17, the method according to any one of claims 18 to 23, or the method according to any one of claims 24 to 32 is implemented.
